(19) Europäisches Patentamt
European Patent Office
Office européen des brevets

(11) **EP 2 682 255 B1**

(12) **EUROPEAN PATENT SPECIFICATION**

(45) Date of publication and mention of the grant of the patent:
**16.12.2015 Bulletin 2015/51**

(21) Application number: **12752807.3**

(22) Date of filing: **14.02.2012**

(51) Int Cl.:
***B29C 45/00*** *(2006.01)* ***B29K 71/00*** *(2006.01)*

(86) International application number:
**PCT/JP2012/053322**

(87) International publication number:
**WO 2012/117840 (07.09.2012 Gazette 2012/36)**

(54) **THERMOPLASTIC RESIN COMPOSITION, AND MOLDED PRODUCT THEREOF**
THERMOPLASTISCHE HARZZUSAMMENSETZUNG UND FORMARTIKEL DARAUS
COMPOSITION DE RÉSINE THERMOPLASTIQUE ET PRODUIT MOULÉ DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2011 JP 2011041546**
**27.06.2011 JP 2011141509**

(43) Date of publication of application:
**08.01.2014 Bulletin 2014/02**

(73) Proprietor: **Toray Industries, Inc.**
**Tokyo, 103-8666 (JP)**

(72) Inventors:
- **YOKOE, Makito**
  **Aichi 455-8502 (JP)**
- **YAMASHITA, Kohei**
  **Aichi 455-8502 (JP)**
- **HORIUCHI, Shunsuke**
  **Aichi 455-8502 (JP)**
- **YAMAUCHI, Koji**
  **Aichi 455-8502 (JP)**

(74) Representative: **Webster, Jeremy Mark**
**Mewburn Ellis LLP**
**City Tower**
**40 Basinghall Street**
**London EC2V 5DE (GB)**

(56) References cited:
**WO-A1-2009/057255**
**WO-A1-2013/008720**
**JP-A- 3 088 828**
**JP-A- 3 167 218**
**JP-A- 6 016 949**
**JP-A- 2007 022 084**
**JP-A- 2008 231 249**
**JP-A- 2010 095 613**
**US-A- 5 264 538**

- **ABDERRAZAK BEN-HAIDA ETAL: "A NOVEL APPROACH TO PROCESSING HIGH-PERFORMANCE POLYMERS THAT EXPLOITS ENTROPICALLY DRIVEN RING-OPENING POLYMERIZATION", MACROMOLECULAR RAPID COMMUNICATIONS, vol. 26, 2005, pages 1377-1382, XP002717056,**
- **PHILIP HODGE, HOWARD M. COLQUHOUN: "Recent work on entropically-driven ring-opening polymerizations: some potential applications", POLYMERS FOR ADVANCED TECHNLOGIES, vol. 16, no. 7, 2005, pages 84-94, XP002717057,**
- **BEN-HAIDA ET AL: "Cyclic oligomers of poly (ether ketone) (PEK): synthesis, extraction from polymer, fractionation, and characterisation of the cyclic trimer, tetramer and pentamer", JOURNAL OF MATERIALS CHEMISTRY, vol. 10, 2000, pages 2011-2016, XP002717055,**
- **MACROMOLECULES vol. 26, 1993, pages 2674 - 8**
- **MACROMOLECULES vol. 29, 1996, pages 5502 - 4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 682 255 B1

## Description

### Technical Field

The present invention relates to a thermoplastic resin composition and a thermoplastic resin composition containing a cyclic poly(phenylene ether ketone) mixture having a specific ring structure so as to have excellent flowability, high crystallization characteristics, high transparency, and excellent processability in melt processing to, e.g., resin molded products, sheets, films, fibers and pipes.

### Background Art

Thermoplastic resins, especially engineering plastics having excellent mechanical characteristics and heat resistance, are used in various applications by taking advantage of their excellent characteristics. For example, polyamide resins and polyester resins have the good balance of the mechanical characteristics and the toughness and are used in applications of various electric and electronic parts, machine parts and automobile parts mainly by injection molding. Among the polyester resins, polybutylene terephthalate (hereinafter abbreviated to as PBT) and polyethylene terephthalate (hereinafter abbreviated to as PET) are widely used as the materials of industrial molded products such as connectors, relays and switches of automobiles and electric and electronic apparatuses by taking advantage of their moldability, heat resistance, mechanical characteristics and chemical resistance. Amorphous resins such as polycarbonate resins are used in a wide range of fields including optical materials and various parts of household electric appliances, office equipment and automobiles by taking advantage of their transparency and dimensional stability.

In the meantime, improvement of the flowability in melt processing or reduction of the melt viscosity is demanded for the material to satisfy the need of thin wall thickness of molded products, accompanied with the recent modularization and weight reduction of large automobile parts and various office equipment. In the applications of films and fibers, there is also an increasing demand for precision processing, so that improvement of the flowability is similarly demanded. In the case of processing to fibers or films, the nozzle end pressure is varied by the influence of resin pressure in melt processing based on the resin viscosity and the influence of solidification characteristics. In the case of yarn processing, this may cause the problems of uneven thickness of threads and breakage of threads, which may be critical especially in processing to very thin threads. In the case of film processing, this may cause the problem of uneven film thickness, which may especially make thin-film processing difficult. Additionally, the retention time during fiber or film processing is longer than that of injection molding. This may cause the problem of low thermal stability in the melt state or the problem of evolution of cracked gas during retention. This may result in the problem of breakage of threads in the case of yarn processing and the problem of undesired air bubbles in the case of film processing. In order to improve the flowability, the general technique employs a method of raising the processing temperature to reduce the resin viscosity. The high processing temperature may, however, reduce the thermal stability in the melt state. It is accordingly difficult to balance between the improved processability by the enhanced flowability and the improved stability in the melt state only by controlling the processing temperature. The reduction of the melt viscosity accompanied with a decrease in molecular weight of the resin generally causes a decrease in mechanical strength. The technique of improving the flowability while maintaining the strength has accordingly been demanded.

Meanwhile, aromatic cyclic compounds have recently received attention, because of their specificities derived from their structures, i.e., the potential for development of applications of high-functional materials and functional materials based on the properties characteristics of their ring molecule structures: for example, application as monomers effective for syntheses of high molecular-weight linear polymers by ring-opening polymerization; and application as resin additives that inhibit the reactions with matrixes, based on their structures without end groups. Among them, compounds having poly(arylene ether ketone) structure having high heat resistance and excellent chemical stability in addition to the above advantages have especially been noted. These compounds have been applied as additives that modify the characteristics of thermoplastic resins, such as the flowability and the stability in the melt state.

For example, Non-Patent Document 1 discloses the structure and the characteristics of a cyclic polyphenylene ether extracted from a commercially available poly(phenylene ether ketone) resin having the linear structure. The content of this cyclic polyphenylene ether is, however, only 0.2 wt% at most with respect to the linear poly(phenylene ether ketone) resin. The effects and the changes in characteristics by containing the cyclic polyphenylene ether are accordingly unknown. The compound disclosed in Non-Patent Document 1 is a high-melting-point compound having the melting point of about 330°C. There is accordingly a problem of limitation in applicability of the thermoplastic resin as the modifier.

Non-Patent Document 2 discloses a method of synthesizing cyclic poly(phenylene ether ketone)s and the characteristics of products. More specifically, Non-Patent Document 2 describes a method of reacting a linear poly(phenylene ether ketone) oligomer having hydroxyl group at both terminals with a linear poly(phenylene ether ketone) oligomer having fluoride group at both terminals, and melting points of produced cyclic compounds. Non-Patent Document 2, however, does not teach the effects or the characteristics by addition of the resulting cyclic poly(phenylene ether ketone)

to a thermoplastic resin. The method described in Non-Patent Document 2 uses the oligomers of the long chains as the materials, so that the resulting cyclic poly(phenylene ether ketone) mixture includes cyclic poly(phenylene ether ketone)s having repeating numbers m= 3 and/or 6, i.e., only cyclic poly(phenylene ether ketone)s having melting points exceeding 270°C. More specifically, the cyclic poly(phenylene ether ketone)s obtained from the above linear oligomers (oligomer with hydroxyl group at both terminals consisting of 4 units of benzene ring component and oligomer with fluoride group at both terminals consisting of 5 units of benzene ring component) are composed of only cyclic trimer (m= 3) and cyclic hexamer (m= 6). It is described that they are cyclic poly(phenylene ether ketone)s having melting points of 366°C and 324°C. In this case, there is also a problem of limitation in applicability of the thermoplastic resin as the resin modifier.

On the other hand, patent Document 1 discloses a composition produced by adding a low-viscosity poly(arylene ether ketone) resin as a viscosity modifier to a higher-viscosity poly(arylene ether ketone) resin. However, only a chain poly(arylene ether ketone) is only mentioned as the low-viscosity poly(arylene ether ketone) resin. Patent Document 1 does not teach the effects by addition of a cyclic poly(arylene ether ketone). Additionally, the chain poly(arylene ether ketone) described in Patent Document 1 does not have the sufficient effects as the viscosity modifier. Patent Documents 2 to 6 disclose resin compositions produced by adding small amounts of poly(ether ether ketone) resins to high heat-resistance thermoplastic resins such as aromatic polyamides, polyether imides, polyphenylene sulfides and liquid crystalline polyesters. Any of Patent Documents 2 to 6, however, describes addition of the chain poly(arylene ether ketone) and does not teach the effects or the characteristics by addition of a cyclic poly(arylene ether ketone) to a thermoplastic resin. These chain poly(arylene ether ketone)s are expected to have high melting points exceeding 330°C. The problem of limitation in applicability of the thermoplastic resin as the resin modifier has not yet been solved. There is accordingly a demand for an additive having higher versatility and greater modifying effects.

Prior Art Documents

Patent Documents:

Patent Document 1: JP 2010-095615A Patent Document 2: JP S59-187054A Patent Document 3: JP S62-283155A Patent Document 4: JP S57-172954A Patent Document 5: JP 2009-067928A; and Patent Document 6: JP 2003-268241A

Non-Patent Documents:

Non-Patent Document 1: Macromolecules, 26, 2674 (1993)
Non-Patent Document 2: Macromolecules, 29, 5502 (1996)

Examples of compositions containing cyclic oligomers are also provided in: Macromolecular Rapid Communications, vol. 26, 2005 pp 1377-1382 PEEK compositions containing cyclic PEEK oligomers are described on page 1378 of MACROMOLECULAR RAPID COMMUNICATIONS, Vol. 26, 2005; Polymers for Advanced Technologies, vol, 16, no. 7, 2005 pp 84-94; Journal of Materials Chemistry, vol. 10, 2000, pp 2011-2016 and US 526438A.

In order to solve the foregoing problems, the invention relates to a resin composition having the excellent flowability in melt processing and the excellent molding processability and additionally relates to a resin composition suitable for melt processing to, e.g., resin molded products, sheets, films, fibers and pipes.

The inventors have accomplished the invention as the result of intensive studies and examinations to solve the foregoing problems.

(1) There is provided a thermoplastic resin composition comprising: 100 parts by weight of (A) a thermoplastic resin which is at least one selected among a poly(phenylene ether ether ketone) resin, a polyphenylene sulfide resin, a polyamide resin, a polyester resin, a polycarbonate resin and a polystyrene resin; and
0.5 to 50 parts by weight of (B) at least one cyclic poly(phenylene ether ketone) that is expressed by General Formula (I) given below and has phenylene ketone shown by -Ph-CO- and phenylene ether shown by -Ph-O-as a repeating structural unit:

[Chem. 1]

$$\left[ \left( Ph-\overset{O}{\overset{\|}{C}} \right)_o \left( Ph-O \right)_p \right]_m \quad \text{(I)}$$

, in which Ph in Formula (I) represents a para-phenylene structure; o and p are respectively integral numbers of not less than 1; and m is an integral number of 2 to 40, and wherein the (B) cyclic poly(phenylene ether ketone) has a melting point of not higher than 270°C.

(2) There is provided the thermoplastic resin composition described in (1), wherein the (B) cyclic poly(phenylene ether ketone) is a mixture containing not less than 5 % by weight of a cyclic poly(phenylene ether ketone) having a repeating number m= 2 and not less than 5% by weight of a cyclic poly(phenylene ether ketone) having a repeating number m= 3 with respect to a total weight 100% of cyclic poly(phenylene ether ketone)s having repeating numbers m= 2 to 8 in the General Formula (I).

(3) There is provided the thermoplastic resin composition described in either one of (1) and (2), wherein the (B) cyclic poly(phenylene ether ketone) is a mixture of cyclic poly(phenylene ether ketone)s having at least three different repeating numbers m.

(4) There is provided the thermoplastic resin composition described in any one of (1) to (3), wherein the (B) cyclic poly(phenylene ether ketone) is a cyclic poly(phenylene ether ether ketone) expressed by General Formula (II) given below:

[Chem. 2]

$$\left( C_6H_4-\overset{O}{\overset{\|}{C}}-C_6H_4-O-C_6H_4-O \right)_m \quad \text{(II)}$$

(Herein m in Formula is an integral number of 2 to 40.)

(5) There is provided the thermoplastic resin composition described in any one of (1) to (4), wherein the (B) cyclic poly(phenylene ether ketone) has a melting point of not higher than 270°C.

(6) There is provided the thermoplastic resin composition described in any one of (1) to (5), wherein the (B) cyclic poly(phenylene ether ketone) has a melting point of not higher than 250°C.

(7) There is provided the thermoplastic resin composition described in any one of (1) to (6), further comprising 0.1 to 200 parts by weight of (C) a filler with respect to 100 parts by weight of the (A) thermoplastic resin.

(8) There is provided the thermoplastic resin composition described in any one of (1) to (7), wherein the (C) filler includes at least a fibrous filler.

(9) There is provided the thermoplastic resin composition described in (8), wherein the (C) filler is a glass fiber and/or a carbon fiber.

(10) There is provided a molded product produced by melt molding the resin composition described in any of (1) to (9).

Advantageous Effects of the Invention

The invention provides the thermoplastic resin composition having the excellent flowability, the high molding processability, the excellent thermal stability in the melt state and the excellent melt processability to injection molded products, fibers and films. The invention also provides the resin composition having the high crystallinity and the high transparency, in addition to these advantageous effects when a specific type of thermoplastic resin is used.

Mode for Carrying out the Invention

The following describes embodiments of the invention. In the description of the invention, the term "weight" means "mass".

(1) Thermoplastic resin

Examples of thermoplastic resins are various melt-moldable resins: for example, polyamide resins, polyester resins, polyacetal resins, polycarbonate resins, polyphenylene ether resins, modified polyphenylene ether resins produced by blending or graft polymerizing polyphenylene ether resins with other resins, polyarylate resins, polysulfone resins, polyphenylene sulfide resins, polyethersulfone resins, polyketone resins, poly(phenylene ether ketone) resins, polyimide resins, polyamide-imide resins, polyetherimide resins, thermoplastic polyurethane resins, high-density polyethylene resins, low-density polyethylene resins, linear low-density polyethylene resins, polypropylene resins, polymethylpentene resins, cyclic olefin resins, poly(1-butene) resins, poly(1-pentene) resins, ethylene/ $\alpha$-olefin copolymers, copolymers of (ethylene and/or propylene) and (unsaturated carboxylic acid and/or unsaturated carboxylic ester), polyolefins obtained by substituting the proton of at least part of the carboxyl group with a metal ion in copolymers of (ethylene and/or propylene) and (unsaturated carboxylic acid and/or unsaturated carboxylic ester), block copolymers of conjugated dienes and vinyl aromatic hydrocarbons, hydrides of block copolymers of conjugated dienes and vinyl aromatic hydrocarbons, polyvinyl chloride resins, polystyrene resins, acrylic resins such as polyacrylate resins and polymethacrylate resins, acrylonitrile copolymers containing acrylonitrile as the major component, acrylonitrile butadiene styrene (ABS) resins, acrylonitrile styrene (AS) resins, cellulose resins such as cellulose acetate, vinyl chloride/ ethylene copolymers, vinyl chloride/ vinyl acetate copolymers, ethylene/ vinyl acetate copolymers and saponified ethylene/ vinyl acetate copolymers. Any of these resins may be used alone or may be used as a polymer alloy of two or more of these resins. The thermoplastic resin may be modified with at least one compound selected among unsaturated carboxylic acids, their acid anhydrides and their derivatives. The present invention employs, as thermoplastic resin (A), poly(phenylene ether ketone) resins, polyphenylene sulfide resins, polyamide resins, polyester resins, polycarbonate resins and styrene resins.

The poly(phenylene ether ketone) resin preferably used for the component (A) of the invention may be a polymer that has the repeating structural unit expressed by Formula (III) given below and that is substantially linear:

[Chem. 3]

$$\left[ Ar-\overset{\overset{\displaystyle O}{\|}}{C}-\left( Ar'O \right)_m \right] \quad (III)$$

(Herein Ar and Ar' in Formula represent identical or different substituted or non-substituted aryl residues, and m is an integral number of not less than 1.)

The substituent group on the benzene ring of Ar or Ar' is not specifically limited but may be, for example, any of hydrocarbon functional groups such as 1 to 20 carbon atom-containing alkyl groups, aryl groups and aralkyl group, heteroatom-containing functional groups such as carboxylic acid group and sulfonic acid group and halogen atoms. Among these, preferable is non-substituted para-phenylene group. The repeating number m of arylene ether unit in Formula (III) is preferably an integral number of not less than 1 and more preferably m= 1 to 3. Most preferable is arylene ether ether ketone group having m= 2. Especially preferable is poly(phenylene ether ether ketone) resin having the repeating structural unit expressed by Formula (IV) given below:

[Chem. 4]

(IV)

The poly(aryl ether ketone) resin is not limited to homopolymer but may be copolymer, such as random copolymer, alternating copolymer or block copolymer. In the case of the copolymer, the copolymer preferably contains not less than 50 mol% of the repeating structural unit expressed by Formula (IV) given above with respect to the entire structural unit.

The degree of polymerization of the poly(aryl ether ketone) resin is not specifically limited. The poly(aryl ether ketone) resin having the reduced viscosity of 0.1 to 3.0 is preferable and that having the reduced viscosity of 0.5 to 2.0 is especially preferable. In the description hereof, unless otherwise specified, the reduced viscosity is a value measured at 25°C with a Ostwald viscometer immediately after completion of dissolution in a concentrated sulfuric acid solution having the concentration of 0.1 g/dL (weight of cyclic poly(phenylene ether ketone) composition / volume of 98% by

weight concentrated sulfuric acid) in order to minimize the influence of sulfonation. The reduced viscosity is calculated by an equation given below:

$$\eta = \{(t/t_0) - 1\} / C$$

where t represents the transit time of the sample solution in seconds, to represents the transit time of the solvent (98% by weight concentrated sulfuric acid) in seconds, and C represents the concentration of the solution.

The polyphenylene sulfide resin preferably used in the invention may be a polymer having the repeating structural unit expressed by the structural formula given below:

[Chem. 5]

(V)

From the viewpoint of heat resistance, the polymer has the repeating unit shown by the above structural formula of preferably not less than 70 mol% and more preferably not less than 90 mol%. The polyphenylene sulfide resin may include about less than 30 mol% of the repeating unit having any of structures given below. Especially preferable is p-phenylene sulfide/ m-phenylene sulfide copolymer (not greater than 20 % mol of m-phenylene sulfide unit) having both the molding processability and the barrier property.

[Chem. 6]

The high yield of the polyphenylene sulfide resin may be obtained by collecting and post-treating a polyphenylene sulfide resin produced by the reaction of an aromatic polyhalogenated compound and a sulfiding agent in a polar organic solvent. More specifically, the method of producing a polymer of relatively small molecular weight described in JP S45-3368B or the method of producing a polymer of relatively large molecular weight described in JP S52-12240B or JP S61-7332A may be employed to manufacture the polyphenylene sulfide resin. The polyphenylene sulfide resin obtained by the above may be used after any of various treatments and processes, for example, cross-linking/ high polymerization by heating in the air, heat treatment in an inert gas atmosphere such as nitrogen or in reduced pressure, washing with an organic solvent, hot water or an acid aqueous solution, and activation with a functional group-containing compound such as an acid anhydride, an amine, an isocyanate, a functional group-containing disulfide compound.

A specific method of cross-linking/ high polymerization of the polyphenylene sulfide resin by heating may heat the polyphenylene sulfide resin in an oxidizing gas atmosphere such as the air or oxygen or in a mixed gas atmosphere of the oxidizing gas and an inert gas such as nitrogen or argon in a heating vessel at a specified temperature until a

desired melt viscosity is achieved. The heat treatment temperature is generally 170 to 280°C and preferably 200 to 270°C. The heat treatment time is generally 0.5 to 100 hours and preferably 2 to 50 hours. The target viscosity level is achievable by controlling these two factors. The heat treatment device may be a general hot air drying machine, a rotary heating device or a heating device with stirring blades. The rotary heating device or the heating device with stirring blades is preferably used to enable efficient and more homogeneous treatment.

A specific method of heat treatment of the polyphenylene sulfide resin in an inert gas atmosphere such as nitrogen or in reduced pressure may employ the heat treatment temperature of 150 to 280°C or preferably 200 to 270°C and the heat treatment time of 0.5 to 100 hours or preferably 2 to 50 hours in an inert gas atmosphere such as nitrogen or in reduced pressure. The heat treatment device may be a general hot air drying machine or a rotary heating device or a heating device with stirring blades. The rotary heating device or the heating device with stirring blades is preferably used to enable efficient and more homogeneous treatment.

The polyphenylene sulfide resin used in the invention is preferably a polyphenylene sulfide resin after washing. Specific methods of such washing include washing with an acid aqueous solution, washing with hot water and washing with an organic solvent. Two or more of such methods may be used in combination for washing.

The following method is described as a specific method of washing the polyphenylene sulfide resin with an organic solvent. More specifically, the organic solvent used for washing is not specifically limited but may be any solvent without degradation action of the polyphenylene sulfide resin: for example, nitrogen-containing polar solvents such as N-methylpyrrolidone, dimethylformamide and dimethyl acetamide; sulfoxide and sulfone solvents such as dimethyl sulfoxide and dimethyl sulfone; ketone solvents such as acetone, methyl ethyl ketone, diethyl ketone and acetophenone; ether solvents such as dimethyl ether, dipropyl ether and tetrahydrofuran; halogenated solvents such as chloroform, methylene chloride, trichloroethylene, ethylene dichloride, dichloroethane, tetrachloroethane and chlorobenzene; alcohol and phenol solvents such as methanol, ethanol, propanol, butanol, pentanol, ethylene glycol, propylene glycol, phenol, cresol and polyethylene glycol; and aromatic hydrocarbon solvents such as benzene, toluene and xylene. Among these organic solvents, N-methyl-2-pyrrolidone, acetone, dimethylformamide and chloroform are preferably used. Any of these organic solvents may be used alone or may be used as a mixture of two or more of these solvents. A specific method of washing with such an organic solvent may soak the polyphenylene sulfide resin in the organic solvent with stirring or with heating as needed basis. The washing temperature of the polyphenylene sulfide resin with the organic solvent is not specifically limited but may be selectively any temperature in the range of ordinary temperature to about 300°C. The higher washing temperature is likely to have the higher washing efficiency, but the washing temperature in the range of ordinary temperature to 150°C generally has the sufficient effect. After washing with the organic solvent, it is preferable to wash the polyphenylene sulfide resin with water or hot water several times, for the purpose of removal of the remaining organic solvent.

The following method is described as a specific method of washing the polyphenylene sulfide resin with hot water. More specifically, distilled water or deionized water is preferably used for hot water washing, in order to achieve the desired effect of chemical modification of the polyphenylene sulfide resin. The procedure of hot water washing generally places a predetermined amount of the polyphenylene sulfide resin in a predetermined amount of water and then heats the polyphenylene sulfide resin in water with stirring at ordinary pressure or in a pressure vessel. As the ratio of the polyphenylene sulfide resin to water, the greater portion of water is preferable. The liquor ratio of not greater than 200 grams of the polyphenylene sulfide resin to 1 liter of water is generally selected.

The procedure of hot water washing preferably uses an aqueous solution containing a group 2-metal element in the periodic table. The aqueous solution containing the group 2-metal element in the periodic table is obtained by adding a water-soluble salt containing the group 2-metal element in the periodic table to water. The concentration of the water-soluble salt containing the group 2-metal element in the periodic table is preferably in the range of about 0.001 to 5% by weight.

Preferable examples used as the group 2-metal element in the periodic table include calcium, magnesium, barium and zinc. Otherwise, available examples of the anion of the salt include acetate ion, halide ion, hydroxide ion and carbonate ion. More specifically, preferable examples of the compound used include calcium acetate, magnesium acetate, zinc acetate, calcium chloride, calcium bromide, zinc chloride, calcium carbonate, calcium hydroxide and calcium oxide. Especially preferable is calcium acetate.

The temperature of the aqueous solution containing the group 2-metal element in the periodic table is preferably not lower than 130°C and more preferably not lower than 150°C. There is no specific upper limit of the washing temperature, but approximately 250°C is the upper limit in general autoclaves.

The liquor ratio of the aqueous solution containing the group 2-metal element in the periodic table is preferably in the range of 2 to 100, more preferably in the range of 4 to 50 and furthermore preferably in the range of 5 to 15 to 1 of dried polymer as the weight ratio.

The following method is described as a specific method of washing the polyphenylene sulfide resin with an acid aqueous solution. More specifically, a specific method may soak the polyphenylene sulfide resin in an acid or an acid aqueous solution with stirring or with heating as needed basis. The acid used here is not specifically limited but

may be any acid without degradation action of the polyphenylene sulfide resin: for example, aliphatic saturated monocarboxylic acids such as formic acid, acetic acid, propionic acid, and butyric acid; halogenated aliphatic saturated carboxylic acids such as chloroacetic acid and dichloroacetic acid; aliphatic unsaturated monocarboxylic acids such as acrylic acid and crotonic acid; aromatic carboxylic acids such as benzoic acid and salicylic acid; dicarboxylic acids such as oxalic acid, malonic acid, succinic acid, phthalic acid and fumaric acid; and inorganic acidic compounds such as sulfuric acid, phosphoric acid, hydrochloric acid, carbonic acid and silicic acid. Among them, acetic acid and hydrochloric acid are preferably used. After such acid treatment, it is preferable to wash the polyphenylene sulfide resin with water or hot water several times, for the purpose of removal of the remaining acid or salt. Distilled water or deionized water is preferably used for such washing, in order not to damage the desired effect of chemical modification of the polyphenylene sulfide resin achieved by the acid treatment.

The ash content of the polyphenylene sulfide resin used in the invention is preferably in a relatively large range of 0.1 to 2% by weight, more preferably in the range of 0.2 to 1% by weight and furthermore preferably in the range of 0.3 to 0.8% by weight, in order to give the desired properties, for example, the flowability during processing and the molding cycle.

The ash content herein means the amount of inorganic components contained in the polyphenylene sulfide resin and is determined by the following method:

(a) weighing 5 to 6 grams of the polyphenylene sulfide resin in a platinum plate burned at 583°C and subsequently cooled;
(b) pre-burning the polyphenylene sulfide resin in the platinum plate at 450 to 500°C;
(c) placing the pre-burned polyphenylene sulfide resin sample in the platinum plate in a muffle furnace set at 583°C and burning the polyphenylene sulfide resin in the platinum plate for about 6 hours until complete ashing;
(d) cooling the ash in a desiccator and then weighing the ash; and
(e) calculating the ash content by an equation of ash content (% by weight)= (weight of ash (g) / weight of sample (g))x 100.

The melt viscosity of the polyphenylene sulfide resin used in the invention is preferably in the range of 1 to 3000 Pa·s (320°C, shear rate: 1000 $sec^{-1}$), more preferably in the range of 1 to 1000 Pa·s and furthermore preferably in the range of 1 to 200 Pa.s, in order to give the properties, for example, improvement of the chemical resistance and the flowability during processing. The melt viscosity herein is a value measured by a Koka-type flow tester with a nozzle having the nozzle diameter of 0.5 mmϕ and the nozzle length of 10 mm at the cylinder temperature of 320°C under the condition of the shear rate of 1000 $sec^{-1}$.

The polyamide resin preferably used in the invention is a polyamide having an amino acid, a lactam or a diamine and a dicarboxylic acid as the main constituents. Typical examples of the main constituents include: amino acids such as 6-aminocaproic acid, 11-aminoundecanoic acid, 12-aminododecanoic acid, para-aminomethylbenzoic acid; lactams such as ε-caprolactam, ω-laurolactam; aliphatic, alicyclic and aromatic diamines such as pentamethylenediamine, hexamethylenediamine, 2-methylpentamethylenediamine, nonamethylenediamine, undecamethylenediamine, dodecamethylenediamine, 2,2,4-/ 2,4,4-trimethylhexamethylenediamine, 5-methylnonamethylenediamine, meta-xylylenediamine, para-xylylenediamine, 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine and aminoethylpiperazine; and aliphatic, alicyclic and aromatic dicarboxylic acids such as adipic acid, suberic acid, azelaic acid, sebacic acid, dodecanedioic acid, terephthalic acid, isophthalic acid, 2-chloroterephthalic acid, 2-methylterephthalic acid, 5-methylisophthalic acid, sodium 5-sulfoisophthalate, 2,6-naphthalene dicarboxylic acid, hexahydroterephthalic acid and hexahydroisophthalic acid. Any of nylon homopolymers and copolymers derived from these materials may be used alone or may be used as a mixture in the invention.

The polyamide resin especially useful in the invention is a polyamide resin having the melting point of not lower than 150°C and the excellent heat resistance and the high strength. Typical examples include: polycaproamide (nylon 6), polyhexamethylene adipamide (nylon 66), polypentamethylene adipamide (nylon 56), poly(hexamethylene sebacamide) (nylon 610), poly(hexamethylene dodecamide) (nylon 612), polyundecanamide (nylon 11), polydodecanamide (nylon 12), polycaproamide/ polyhexamethylene adipamide copolymer (nylon 6/66), polycaproamide/ polyhexamethylene terephthalamide copolymer (nylon 6/6T), polyhexamethylene adipamide/ polyhexamethylene terephthalamide copolymer (nylon 66/6T), polyhexamethylene adipamide/ polyhexamethylene isophthalamide copolymer (nylon 66/6I), polyhexamethylene terephthalamide/ polyhexamethylene isophthalamide copolymer (nylon 6T/6I), polyhexamethylene terephthalamide/ polydodecanamide copolymer (nylon 6T/12), polyhexamethylene adipamide/ polyhexamethylene terephthalamide/ polyhexamethylene isophthalamide copolymer (nylon 66/6T/6I), polyxylylene adipamide (nylon XD6), polyhexamethylene terephthalamide/ poly-2-methylpentamethylene terephthalamide copolymer (nylon 6T/M5T), polynonamethylene terephthalamide (nylon 9T), nylon 6I/6T/PACMT (bis(4-aminocyclohexyl)methane/ terephthalic acid),

nylon 6T/6I/MACMT (bis(3-methyl-4-aminocyclohexyl)methane/ terephthalic acid), nylon 6T/6I/MXDT (meta-xylylenediamine/ terephthalic acid), nylon 12 (ω-laurolactam)/PACM (bis(4-aminocyclohexyl)methane), nylon 12/MACMT, nylon 12/MACMI (bis(3-methyl-4-aminocyclohexyl)methane/ isophthalic acid) and their mixtures.

Among them, nylon 6, nylon 66, nylon 12, nylon 610, nylon 6/66 copolymer and copolymers having the hexamethylene terephthalamide unit, such as nylon 6T/66 copolymer, nylon 6T/6I copolymer, nylon 6T/12 copolymer and nylon 6T/6 copolymer are preferably used as the polyamide resin. Especially preferable are nylon 6 and nylon 66. In practice, it is also preferable to use any of these polyamide resins in the form of a mixture, based on the desired properties, for example, shock resistance and molding processability.

The degree of polymerization of the polyamide resin is not specifically limited. The polyamide resin having the relative viscosity, which is measured at 25°C in a 98% concentrated sulfuric acid solution having the sample concentration of 1.0 g/dl, in the range of 1.5 to 7.0 is preferable and that in the range of 2.0 to 6.0 is especially preferable.

A copper compound is preferably used for the polyamide resin of the invention, in order to improve the long-term heat resistance. Typical examples of the copper compound include copper (I) chloride, copper (II) chloride, copper (I) bromide, copper (II) bromide, copper (I) iodide, copper (II) iodide, copper (II) sulfate, copper (II) nitrate, copper phosphate, copper (I) acetate, copper (II) acetate, copper (II) salicylate, copper (II) stearate, copper (II) benzoate and complex compounds of the above inorganic copper halides and xylylenediamine, 2-mercaptobenzimidazol and benzimidazol. Among them, monovalent copper compounds and especially monovalent copper halides are preferable. Copper (I) acetate and copper (I) iodide are especially preferable as the copper compound. In general, the amount of the copper compound added is preferably 0.01 to 2 parts by weight and more preferably in the range of 0.015 to 1 part by weight with respect to 100 parts by weight of the polyamide resin. Excessive addition may release metal copper during melt molding and devaluate the resulting product by coloring. The procedure of the invention may add an alkali halide accompanied with the copper compound. Examples of the alkali halide include lithium chloride, lithium bromide, lithium iodide, potassium chloride, potassium bromide, potassium iodide, sodium bromide and sodium iodide. Especially preferable are potassium iodide and sodium iodide.

The polyester resin preferably used in the invention is a polymer having ester bond in the main chain and showing no melt liquid crystallinity and more specifically a polymer or a copolymer having at least one selected among (I) a dicarboxylic acid or its ester-forming derivative and a diol or its ester-forming derivative, (II) a hydroxylcarboxylic acid or its ester-forming derivative and (III) a lactone as the major structural unit.

Examples of the dicarboxylic acid or its ester-forming derivative include: aromatic dicarboxylic acids such as terephthalic acid, isophthalic acid, phthalic acid, 2,6-naphthalene dicarboxylic acid, 1,5-naphthalene dicarboxylic acid, bis(p-carboxyphenyl)methane, anthracene dicarboxylic acid, 4,4'-diphenyl ether dicarboxylic acid, 5-tetrabutylphosphonium isophthalic acid and sodium 5-sulfoisophthalic acid; aliphatic dicarboxylic acids such as oxalic acid, succinic acid, adipic acid, sebacic acid, azelaic acid, dodecanedioic acid, malonic acid, glutaric acid and dimer acid; alicyclic dicarboxylic acids such as 1,3-cyclohexane dicarboxylic acid and 1,4-cyclohexane dicarboxylic acid; and their ester-forming derivatives.

Examples of the diol or its ester-forming derivative include: 2 to 20 carbon atom-containing aliphatic glycols such as ethylene glycol, propylene glycol, 1,4-butanediol, neopentyl glycol, 1,5-pentanediol, 1,6-hexanediol, decamethylene glycol, cyclohexanedimethanol, cyclohexanediol and dimer diol; long-chain glycols having the molecular weight of 200 to 100000 such as polyethylene glycol, poly-1,3-propylene glycol and polytetramethylene glycol; aromatic dioxy compounds such as 4,4'-dihydroxybiphenyl, hydroquinone, t-butylhydroquinone, bisphenol A, bisphenol S and bisphenol F; and their ester-forming derivatives.

Examples of the polymer or the copolymer having the dicarboxylic acid or its ester-forming derivative and the diol or its ester-forming derivative as the structural unit include: aromatic polyester resins such as polyethylene terephthalate, polypropylene terephthalate, polybutylene terephthalate, poly(cyclohexane dimethylene terephthalate), polyhexylene terephthalate, polyethylene isophthalate, polypropylene isophthalate, polybutylene isophthalate, poly(cyclohexane dimethylene isophthalate), polyhexylene isophthalate, polyethylene naphthalate, polypropylene naphthalate, polybutylene naphthalate, poly(ethylene isophthalate/ terephthalate), poly(propylene isophthalate/ terephthalate), poly(butylene isophthalate/ terephthalate), poly(ethylene terephthalate/ naphthalate), poly(propylene terephthalate/ naphthalate), poly(butylene terephthalate/ naphthalate), poly(butylene terephthalate/ decanedicarboxylate), poly(ethylene terephthalate/ cyclohexane dimethylene terephthalate), poly(ethylene terephthalate/ sodium 5-sulfoisophthalate), poly(propylene terephthalate/ sodium 5-sulfoisophthalate), poly(butylene terephthalate/ sodium 5-sulfoisophthalate), polyethylene terephthalate/ polyethylene glycol, polypropylene terephthalate/ polyethylene glycol, polybutylene terephthalate/ polyethylene glycol, polyethylene terephthalate/ polytetramethylene glycol, polypropylene terephthalate/ polytetramethylene glycol, polybutylene terephthalate/ polytetramethylene glycol, poly(ethylene terephthalate/ isophthalate)/ polytetramethylene glycol, poly(propylene terephthalate/ isophthalate)/ polytetramethylene glycol, poly(butylene terephthalate/ isophthalate)/ polytetramethylene glycol, poly(ethylene terephthalate/ succinate), poly(propylene terephthalate/ succinate), poly(butylene terephthalate/ succinate), poly(ethylene terephthalate/ adipate), poly(propylene terephthalate/ adipate), poly(butylene terephthalate/ adipate), poly(ethylene terephthalate/ sebacate), poly(propylene terephthalate/

sebacate), poly(butylene terephthalate/ sebacate), poly(ethylene terephthalate/ isophthalate/ adipate), poly(propylene terephthalate/ isophthalate/ adipate), poly(butylene terephthalate/ isophthalate/ succinate), poly(butylene terephthalate/ isophthalate/ adipate) and poly(butylene terephthalate/ isophthalate/ sebacate); and aliphatic polyester resins such as polyethylene oxalate, polypropylene oxalate, polybutylene oxalate, polyethylene succinate, polypropylene succinate, polybutylene succinate, polyethylene adipate, polypropylene adipate, polybutylene adipate, poly(neopentyl glycol adipate), polyethylene sebacate, polypropylene sebacate, polybutylene sebacate, poly(ethylene succinate/ adipate), poly(propylene succinate/ adipate) and poly(butylene succinate/ adipate).

Examples of the above hydroxylcarboxylic acid include glycolic acid, lactic acid, hydroxypropionic acid, hydroxybutyric acid, hydroxyvaleric acid, hydroxycaproic acid, hydroxybenzoic acid, p-hydroxybenzoic acid, 6-hydroxy-2-naphthoic acid, and their ester-forming derivatives. Examples of the polymer or the copolymer having the hydroxylcarboxylic acid or its ester-forming derivative as the structural unit include aliphatic polyester resins such as polyglycolic acid, polylactic acid, poly(glycolic acid/ lactic acid), poly(hydroxybutyric acid/ β-hydroxybutyric acid/ β- hydroxyvaleric acid).

Examples of the above lactone include caprolactone, valerolactone, propiolactone, undecalactone and 1,5-oxepan-2-one. Examples of the polymer or the copolymer having the lactone as the structural unit include polycaprolactone, polyvalerolactone, polypropiolactone and poly(caprolactone/ valerolactone).

Among them, a polymer or a copolymer having a dicarboxylic acid or its ester-forming derivative and a diol or its ester-forming derivative as the major structural unit is preferable. A polymer or a copolymer having an aromatic dicarboxylic acid or its ester-forming derivative and an aliphatic diol or its ester-forming derivative as the major structural unit is more preferable. A polymer or a copolymer having terephthalic acid or its ester-forming derivative and an aliphatic diol selected among ethylene glycol, propylene glycol and butanediol or its ester-forming derivative as the major structural unit is furthermore preferable. More specifically, aromatic polyester resins such as polyethylene terephthalate, polypropylene terephthalate, polybutylene terephthalate, poly(cyclohexane dimethylene terephthalate), polyethylene naphthalate, polypropylene naphthalate, polybutylene naphthalate, poly(ethylene isophthalate/ terephthalate), poly(propylene isophthalate/ terephthalate), poly(butylene isophthalate/ terephthalate), poly(ethylene terephthalate/ naphthalate), poly(propylene terephthalate/ naphthalate) and poly(butylene terephthalate/ naphthalate) are particularly preferable. Among them, polyethylene terephthalate and polybutylene terephthalate are most preferable.

According to the invention, the ratio of terephthalic acid or its ester-forming derivative to all the dicarboxylic acids contained in the polymer or the copolymer having the dicarboxylic acid or its ester derivative and the diol or its ester-forming derivative as the major structural unit is preferably not less than 30 mol% and more preferably not less than 40 mol%.

According to the invention, from the viewpoint of hydrolysis resistance, it is preferable to use two or more different polyester resins.

The amount of carboxyl end group of the polyester resin used in the invention is not specifically limited, but from the viewpoints of hydrolysis resistance and heat resistance, is preferably not greater than 50 eq/t, more preferably not greater than 30 eq/t, furthermore preferably not greater than 20 eq/t and especially preferably not greater than 10 eq/t. The lower limit is 0 eq/t. According to the invention, the amount of carboxyl end group of the polyester resin is a value obtained by dissolving the polyester resin in an o-cresol/ chloroform solvent and titrating with ethanolic potassium hydroxide.

The amount of vinyl end group of the polyester resin used in the invention is not specifically limited, but from the viewpoint of color tone, is preferably not greater than 15 eq/t, more preferably not greater than 10 eq/t and furthermore preferably not greater than 5 eq/t. The lower limit is 0 eq/t. According to the invention, the amount of vinyl end group of the polyester resin is a value measured by $^1$H-NMR with a deuterated hexafluoroisopropanol solvent.

The amount of hydroxyl end group of the polyester resin used in the invention is not specifically limited, but from the viewpoint of moldability, is preferably not less than 50 eq/t, more preferably not less than 80 eq/t, furthermore preferably not less than 100 eq/t and especially preferably not less than 120 eq/t. The upper limit is not specifically restricted but may be 180 eq/t. According to the invention, the amount of hydroxyl end group of the polyester resin is a value measured by $^1$H-NMR with a deuterated hexafluoroisopropanol solvent.

The viscosity of the polyester resin used in the invention is not specifically limited, but the intrinsic viscosity measured in an o-chlorophenol solution at 25°C is preferably in the range of 0.36 to 1.60 dl/g and more preferably in the range of 0.50 to 1.25 dl/g.

From the viewpoint of heat resistance, the molecular weight of the polyester resin used in the invention is preferably in the range of 50 thousand to 500 thousand, more preferably in the range of 100 thousand to 300 thousand and further more preferably in the range of 150 thousand to 250 thousand as the weight-average molecular weight (Mw).

The manufacturing method of the polyester resin used in the invention is not specifically limited. Either of known polycondensation method and ring-opening polymerization method may be adopted for manufacturing. Either of batch polymerization and continuous polymerization may be employed. Either of transesterification reaction and direct polymerization reaction may be employed. Continuous polymerization is, however, preferable since continuous polymerization

enables reduction in amount of carboxyl end group and enhances the effects of improving the flowability and the hydrolysis resistance. Direct polymerization is also preferable from the viewpoint of cost.

When the polyester resin used in the invention is a polymer or a copolymer obtained by condensation reaction of a dicarboxylic acid or its ester-forming derivative and a diol or its ester-forming derivative as the major components, the manufacturing procedure makes the dicarboxylic acid or its ester-forming derivative and the diol or its ester-forming derivative first subject to esterification reaction or transesterification reaction and then subject to polycondensation reaction. In order to effectively accelerate the esterification reaction or the transesterification reaction and the polycondensation reaction, it is preferable to add a catalyst of polymerization reaction during these reactions. Specific examples of the catalyst of polycondensation reaction include: organotitanium compounds such as methyl ester, tetra-n-propyl ester, tetra-n-butyl ester, tetraisopropyl ester, tetraisobutyl ester, tetra-tert-butyl ester, cyclohexyl ester, phenyl ester, benzyl ester, and tolyl ester of titanic acid and their mixed esters; tin compounds such as dibutyltin oxide, methylphenyltin oxide, tetraethyltin, hexaethylditin oxide, cyclohexahexylditin oxide, didodecyltin oxide, triethyltin hydroxide, triphenyltin hydroxide, triisobutyltin acetate, dibutyltin diacetate, diphenyltin dilaurate, monobutyltin trichloride, dibutyltin dichloride, tributyltin chloride, dibutyltin sulfide, butylhydroxytin oxide, and alkyl stannoic acids such as methyl stannoic acid, ethyl stannoic acid and butyl stannoic acid; zirconia compounds such as zirconium tetra-n-butoxide; and antimony compounds such as antimony trioxide and antimony acetate. Among them, the organotitanium compounds and the tin compounds are preferable. More specifically, tetra-n-propyl titanate, tetra-n-butyl titanate and tetraisopropyl titanate are preferable, and tetra-n-butyl titanate is especially preferable. Any of these catalysts of polymerization reaction may be used alone or may be used in combination of two or more of the catalysts. From the viewpoints of the mechanical characteristics, the moldability and the color tone, the amount of the catalyst of polymerization reaction added is preferably in the range of 0.005 to 0.5 parts by weight and more preferably in the range of 0.01 to 0.2 parts by weight with respect to 100 parts by weight of the polyester resin.

The polycarbonate resin is a resin having the carbonate bond and may be a polymer or a copolymer obtained by reaction of an aromatic hydroxyl compound with a carbonate precursor or by reaction of an aromatic hydroxy compound and a small amount of a polyhydroxy compound with a carbonate precursor. Examples of the aromatic hydroxy compound include 2,2-bis(4-hydroxyphenyl)propane (generally called bisphenol A), bis(4-hydroxyphenyl)methane, 1,1,-bis(4-hydroxyphenyl)ethane, 1,1-bis(4-hydroxyphenyl)cyclohexane, 2,2-bis(4-hydroxy-3,5-dimethylphenyl)propane, 2,2-bis(4-hydroxy-3,5-dibromophenyl)propane, 2,2-bis(hydroxy-3-methylphenyl)propane, bis(4-hydroxyphenyl) sulfide, bis(4-hydroxyphenyl)sulfone, hydroquinone, resorcinol, 4,6-dimethyl-2,4,6-tri(4-hydroxyphenyl)heptene, 2,4-dimethyl-2,4,6-tri(4-hydroxyphenyl)heptene, 2,6-dimethyl-2,4,6-tri(4-hydroxyphenyl)heptene, 1,3,5-tri(4-hydroxyphenyl)benzene, 1,1,1-tri(4-hydroxyphenyl)ethane, 3,3-bis(4-hydroxyaryl)oxyindole, 5-chloro-3,3-bis(4-hydroxyaryl)oxyindole, 5,7-dichloro-3,3-bis(4-hydroxyaryl)oxyindole and 5-bromo-3,3-bis(4-hydroxyaryl)oxyindole. Any of these aromatic hydroxy compounds may be used alone or may be used in combination of two or more of the aromatic hydroxy compounds.

Carbonyl halides, carbonate esters and haloformates may be used as the carbonate precursor. Specific examples include phosgene and diphenyl carbonate.

The molecular weight of the polycarbonate resin used in the invention is not specifically limited. In order to have the excellent shock resistance and moldability, however, the polycarbonate resin having the specific viscosity of 0.1 to 4.0 is preferable, that having the specific viscosity in the range of 0.5 to 3.0 is more preferable, and that having the specific viscosity in the range of 0.8 to 2.0 is most preferable, when the specific viscosity is measured at 20°C after dissolution of 0.7 grams of the polycarbonate resin in 100 ml of methylene chloride.

The styrene resin used in the invention means a resin composition obtained by polymerization of an aromatic vinyl monomer such as styrene as one monomer component. Acrylonitrile styrene resins (AS resin) and acrylonitrile butadiene styrene resins (ABS resins) are preferably used as the styrene resin. The ABS resin used in the invention is a resin composition made of a diene rubber, vinyl cyanide monomer and an aromatic vinyl monomer and additionally another copolymerizable monomer as needed basis and is a copolymer obtained by graft copolymerizing the whole amount of the copolymerizable monomer with the diene rubber and subsequently copolymerizing the other monomers with the graft copolymer.

Examples of the diene rubber used in the invention include polybutadiene rubber, acrylonitrile-butadiene copolymer rubber, styrene-butadiene copolymer rubber and polyisoprene rubber. Any of these diene rubbers may be used alone or may be used in combination of two or more of the diene rubbers. Polybutadiene and/or styrene-butadiene copolymer rubber are preferably used. The vinyl cyanide may be, for example, acrylonitrile or methacrylonitrile, and acrylonitrile is particularly preferable. The aromatic vinyl may be, for example, styrene, $\alpha$-methylstyrene, p-methylstyrene, p-t-butylstyrene. Among them, styrene and/or $\alpha$-methylstyrene are preferably used. Examples of the another copolymerizable monomer include: $\alpha$, $\beta$-unsaturated carboxylic acids such as acrylic acid and methacrylic acid; $\alpha$, $\beta$-unsaturated carboxylic esters such as methyl methacrylate, ethyl methacrylate, t-butyl methacrylate and cyclohexyl methacrylate; $\alpha$, $\beta$-unsaturated dicarboxylic acid anhydrides such as maleic anhydride and itaconic anhydride; and imide compounds of $\alpha$, $\beta$-unsaturated carboxylic acids such as N-phenylmaleimide, N-methylmaleimide and N-t-butylmaleimide.

The composition of the ABS resin is not specifically limited. From the viewpoints of the molding processability

and the shock resistance of the resulting thermoplastic resin composition, however, the content of the diene rubber with respect to 100 parts by weight of the ABS resin is preferably 5 to 85 parts by weight and more preferably 15 to 75 parts by weight. The content of the vinyl cyan is preferably 5 to 50 parts by weight, more preferably 7 to 45 parts by weight and further more preferably 8 to 40 parts by weight. The content of the aromatic vinyl is preferably 10 to 90 parts by weight, more preferably 13 to 83 parts by weight and furthermore preferably 17 to 77 parts by weight. The manufacturing method of the ABS resin is not specifically limited, and any of generally known techniques such as bulk polymerization, solution polymerization, bulk suspension polymerization, suspension polymerization and emulsion polymerization may be employed. The above composition may be obtained by blending separately (graft) copolymerized resins.

(2) Cyclic poly(phenylene ether ketone)

The cyclic poly(phenylene ether ketone) according to the invention is a cyclic compound that is expressed by General Formula (VI) given below and has at least one phenylene ketone shown by formula -Ph-CO- and at least one phenylene ether shown by formula -Ph-O- as repeating structural unit

[Chem. 7]

$$\overline{\left[ \left( \text{Ph-}\overset{O}{\overset{\|}{C}} \right)_o \left( \text{Ph-O} \right)_p \right]_m} \qquad \text{(VI)}$$

Herein Ph in Formula (VI) represents a para-phenylene group; and o and p are respectively integral numbers of not less than 1. Preferable specific examples of the cyclic poly(phenylene ether ketone) include cyclic poly(phenylene ether ketone) having o= 1 and p= 1 (hereinafter may be referred to as cyclic PEK), cyclic poly(phenylene ether ether ketone) having o= 1 and p= 2 (hereinafter may be referred to as cyclic PEEK), cyclic poly(phenylene ether ketone ketone) having o= 2 and p= 1 (hereinafter may be referred to as cyclic PEKK), cyclic poly(phenylene ether ether ketone ketone) having o= 2 and p= 2 (hereinafter may be referred to as cyclic PEEKK) and other cyclic poly(phenylene ether ketone)s having different arrangements of phenylene ketone and phenylene ether. An especially preferable example is cyclic poly(phenylene ether ether ketone) having o= 1 and p= 2.

The range of the repeating number m in Formula (VI) is not specifically limited but is preferably the range of 2 to 40, more preferably the range of 2 to 20, furthermore preferably the range of 2 to 15 and particularly preferably the range of 2 to 10. The greater repeating number m is likely to cause the higher melting point of the cyclic poly(phenylene ether ketone). In order to melt the cyclic poly(phenylene ether ketone) at low temperature, it is preferable to set the repeating number m to the above range.

The cyclic poly(phenylene ether ketone) expressed by Formula (VI) is preferably a mixture of cyclic poly(phenylene ether ketone)s having at least three different repeating numbers m, more preferably a mixture of cyclic poly(phenylene ether ketone)s having at least four different repeating numbers m and furthermore preferably a mixture of cyclic poly(phenylene ether ketone)s having at least five different repeating numbers m. It is especially preferable that the repeating numbers m are consecutive numbers. Compared with the single compound having a single repeating number m and the mixture of cyclic poly(phenylene ether ketone)s of two different repeating numbers m, the mixture of three or more different repeating numbers m is likely to have the lower melting point. Additionally, the mixture having consecutive repeating numbers m is likely to have the lower melting point than the mixture having non-consecutive repeating numbers m.

The cyclic poly(phenylene ether ketone) expressed by General Formula (VI) according to the invention is a mixture containing at least not less than 5% by weight of a cyclic poly(phenylene ether ketone) having a repeating number m= 2 and not less than 5% by weight of a cyclic poly(phenylene ether ketone) having a repeating number m= 3, with respect to the total weight 100% of cyclic poly(phenylene ether ketone)s having repeating numbers m= 2 to 8. A mixture respectively containing at least not less than 6% by weight is preferable, a mixture respectively containing not less than 7% by weight of is more preferable, and a mixture respectively containing not less than 8% by weight is furthermore preferable. A mixture additionally containing not less than 5% by weight of a cyclic poly(phenylene ether ketone) having a repeating number m= 4 is especially preferable. The cyclic poly(phenylene ether ketone) having the cyclic composition of the above range is preferable since such cyclic poly(phenylene ether ketone) is likely to decrease its melting point as described below and have the improved processability by addition to the thermoplastic resin and the improved advantageous effects accompanied with such addition. The cyclic poly(phenylene ether ketone)s having the different repeating numbers m may be subjected to divisional analysis by high-performance liquid chromatography. The cyclic composition of the cyclic poly(phenylene ether ketone), i.e., the weight fractions of the cyclic poly(phenylene ether ketone)s having

the respective repeating number m contained in the cyclic poly(phenylene ether ketone) mixture, may be calculated from the peak area ratio of the respective cyclic poly(phenylene ether ketone)s by high-performance liquid chromatography.

Additionally, the cyclic poly(phenylene ether ketone) of the invention has the melting point of not higher than 270°C, which is significantly lower than the melting point of the corresponding linear poly(phenylene ether ketone). The melting point is preferably not higher than 250°C, more preferably not higher than 230°C and furthermore preferably not higher than 200°C. The lower melting point of the cyclic poly(phenylene ether ketone) leads to the lower processing temperature and advantageously reduces energy required for processing by addition to the thermoplastic resin composition. The melting point of the cyclic poly(phenylene ether ketone) herein may be determined by measuring the endothermic peak temperature with a differential scanning calorimeter.

The cyclic poly(phenylene ether ketone) of the invention is preferably a cyclic poly(phenylene ether ketone) composition containing not less than 60% by weight of cyclic poly(phenylene ether ketone), more preferably a composition containing not less than 65% by weight of cyclic poly(phenylene ether ketone), furthermore preferably a composition containing not less than 70% by weight of cyclic poly(phenylene ether ketone) and especially preferably a composition containing not less than 75% by weight of cyclic poly(phenylene ether ketone). The impurity components contained in the cyclic poly(phenylene ether ketone) composition, i.e., components other than cyclic poly(phenylene ether ketone) are mainly linear poly(phenylene ether ketone). Since the linear poly(phenylene ether ketone) have the higher melting points, the higher weight fractions of the linear poly(phenylene ether ketone) are likely to increase the melting point of the cyclic poly(phenylene ether ketone) composition. The weight fractions of the cyclic poly(phenylene ether ketone) in the above range in the cyclic poly(phenylene ether ketone) composition are thus likely to give the cyclic poly(phenylene ether ketone) composition of the low melting point. The weight fractions of the cyclic poly(phenylene ether ketone) in the above range are also preferable, in order to reduce energy required for processing by addition to the thermoplastic resin composition.

The reduced viscosity ($\eta$) of the cyclic poly(phenylene ether ketone) of the invention having the above characteristics is preferably not higher than 0.1 dL/g, more preferably not higher than 0.09 dL/g and further more preferably not higher than 0.08 dL/g.

The manufacturing method of the cyclic poly(phenylene ether ketone) according to the invention may be any method that can produce the cyclic poly(phenylene ether ketone) having the above characteristics. Preferable methods include:

(a) a manufacturing method by reaction of a mixture containing at least a dihalogenated aromatic ketone compound, a base and an organic polar solvent with heating; and
(b) a manufacturing method by reaction of a mixture containing at least a dihalogenated aromatic ketone compound, a base, a dihydroxy aromatic compound and an organic polar solvent with heating.

Specific examples of the dihalogenated aromatic ketone compound include 4,4'-difluorobenzophenone, 4,4'-dichlorobenzophenone, 4,4'-dibromobenzophenone, 4,4'-diiodobenzophenone, 4-fluoro-4' chlorobenzophenone, 4-fluoro-4'- bromobenzophenone, 4-fluoro-4'-iodobenzophenone, 4-chloro-4'- bromobenzophenone, 4-chloro-4'-iodobenzophenone, 4-bromo-4'-iodobenzophenone, 1,4-bis(4-fluorobenzoyl)benzene and 1,4-bis(4- chlorobenzoyl)benzene. Among them, 4,4'-difluorobenzophenone, 4,4'-dichlorobenzophenone, 1,4-bis(4-fluorobenzoyl)benzene and 1,4-bis(4-chlorobenzoyl)benzene are preferable; 4,4'-difluorobenzophenone and 4,4'-dichlorobenzophenone are more preferable; and 4,4'-difluorobenzophenone is especially preferable.

Specific examples of the base include: carbonates of alkali metals such as lithium carbonate, sodium carbonate, potassium carbonate, rubidium carbonate and cesium carbonate; carbonates of alkaline earth metals such as calcium carbonate, strontium carbonate and barium carbonate; bicarbonates of alkali metals such as lithium hydrogen carbonate, sodium hydrogen carbonate, potassium hydrogen carbonate, rubidium hydrogen carbonate and cesium hydrogen carbonate; bicarbonates of alkaline earth metals such as calcium hydrogen carbonate, strontium hydrogen carbonate and barium hydrogen carbonate; hydroxides of alkali metals such as lithium hydroxide, sodium hydroxide, potassium hydroxide, rubidium hydroxide and cesium hydroxide; and hydroxides of alkaline earth metals such as calcium hydroxide, strontium hydroxide and barium hydroxide. Among them, from the viewpoints of economical efficiency and reactivity, carbonates such as sodium carbonate and potassium carbonate and bicarbonates such as sodium hydrogen carbonate and potassium hydrogen carbonate are preferable. Sodium carbonate and potassium carbonate are especially preferable. Any of these bases may be used alone or may be used as a mixture of two or more of the bases. The alkali is preferably used in the form of anhydride but may be used in the form of hydrate or in the form of aqueous mixture. The aqueous mixture herein means an aqueous solution, a mixture of an aqueous solution and a solid component or a mixture of water and a solid component.

The organic polar solvent used in manufacture of the cyclic poly(phenylene ether ketone) according to the invention is not specifically limited but may be any organic polar solvent that does not substantially cause interference

with the reaction or any undesired side reactions such as degradation of the produced cyclic poly(phenylene ether ketone). Specific examples of the organic polar solvent include: nitrogen-containing polar solvents such as N-methyl-2-pyrrolidone, N-methylcaprolactam, N,N-dimethylformamide, N,N-dimethylacetamide, 1,3-dimethyl-2-imidazolidinone, hexamethyl phosphoramide and tetramethylurea; sulfoxide and sulfone solvents such as dimethyl sulfoxide, dimethyl sulfone, diphenyl sulfone and sulfolane; nitrile solvents such as benzonitrile; diaryl ethers such as diphenyl ether; ketones such as benzophenone and acetophenone; and mixtures thereof. All of these polar solvents have the high reaction stability and may thus be used favorably. Among them, N-methyl-2-pyrrolidone and dimethyl sulfoxide are preferable, and N-methyl-2-pyrrolidone is especially preferable. These organic polar solvents have the excellent stability in the high temperature region and are also preferable because of their easy availability.

Preferable specific examples of the dihydroxy aromatic compound used in the invention include hydroquinone, 4,4'-dihydroxybenzophenone and 1,4-bis(4-hydroxybenzoyl)benzene. Hydroquinone and 4,4'-dihydroxybenzophenone are more preferable, and hydroquinone is especially preferable. Any of these dihydroxy aromatic compounds may be used alone or may be used as a mixture of two or more of the dihydroxy aromatic compounds.

In manufacture of the cyclic poly(phenylene ether ketone) by the manufacturing method (a) or the manufacturing method (b) described above, the amount of the organic polar solvent contained in the mixture is preferably not less than 1.15 liters, more preferably not less than 1.30 liters, furthermore preferably not less than 1.50 liters and especially preferably not less than 2.0 liters with respect to 1.0 mol of the benzene ring component contained in the mixture. There is no restriction on the upper limit of the amount of the organic polar solvent contained in the mixture, but the amount of the organic polar solvent is preferably not greater than 100 liters, more preferably not greater than 50 liters, furthermore preferably not greater than 20 liters and especially preferably not greater than 10 liters with respect to 1.0 mol of the benzene ring component contained in the mixture. An increase in used amount of the organic polar solvent are likely to improve the selectivity of production of the cyclic poly(phenylene ether ketone). The excessive amount of the organic polar solvent, however, is likely to decrease the amount of the cyclic poly(phenylene ether ketone) produced per unit volume of a reaction vessel and is also likely to extend the time required for the reaction. It is accordingly preferable to use the organic polar solvent in the above range, in order to achieve a good balance between the selectivity of production and the productivity of the cyclic polyphenylene ether ketone. The amount of the organic polar solvent herein is specified as the volume of the organic polar solvent at ordinary temperature and pressure. The used amount of the organic polar solvent in the reaction mixture is the amount determined by subtracting the amount of the organic polar solvent removed from the reaction system during, for example, dehydration from the amount of the organic polar solvent introduced into the reaction system. The benzene ring component contained in the mixture herein means the benzene ring component that is included in the material and is capable of being changed to the cyclic poly(phenylene ether ketone) structural component by the reaction. The "mole number" of the benzene ring component in the material means the "number of benzene rings constituting the compound". For example, 1 mol of 4,4'-difluorobenzophenone is specified as 2 mol of the benzene ring component, and 1 mol of hydroquinone is specified as 1 mol of the benzene ring component. A mixture containing 1 mol of 4,4'-difluorobenzophenone and 1 mol of hydroquinone is specified as a mixture containing 3 mol of the benzene ring component. A component that is incapable of being changed to the cyclic poly(phenylene ether ketone) by the reaction, for example, toluene is specified as 0 mol of the benzene ring component.

In the manufacturing method (a) of the cyclic poly(phenylene ether ketone) by reaction of the mixture containing at least the dihalogenated aromatic ketone compound, the base and the organic polar solvent with heating, the used amount of the base may be any ratio greater than the stoichiometric ratio to the dihalogenated aromatic ketone compound. It is assumed that the used amount of a divalent base such as sodium carbonate or potassium carbonate is specified as A mol and that the used amount of a monovalent base such as sodium hydrogen carbonate and potassium hydrogen carbonate is specified as B mol. A specific used amount of the base specified as (A+2B) is preferably in the range of 1.00 mol to 1.25 mol, more preferably in the range of 1.00 mol to 1.15 mol and furthermore preferably in the range of 1.00 mol to 1.10 mol with respect to 1.0 mol of the dihalogenated aromatic ketone compound used in manufacture of the cyclic poly(phenylene ether ketone) by the manufacturing method (a).

In the manufacturing method (b) of the cyclic poly(phenylene ether ketone) by reaction of the mixture containing at least the dihalogenated aromatic ketone compound, the base, the dihydroxy aromatic compound and the organic polar solvent with heating, on the other hand, the used amount of the base may be any ratio greater than the stoichiometric ratio to the dihydroxy aromatic compound. A specific used amount of the base specified as (A+2B) is preferably in the range of 1.00 mol to 1.10 mol, more preferably in the range of 1.00 mol to 1.05 mol and furthermore preferably in the range of 1.00 mol to 1.03 mol with respect to 1.0 mol of the dihydroxy aromatic compound. When a metal salt of a dihydroxy aromatic compound separately produced is used for manufacture of the cyclic poly(phenylene ether ketone) by the manufacturing method (b), an excess amount of the base may be additionally supplied. The additionally-supplied excess amount of the base specified as (A+2B) is preferably in the range of 0 to 0.10 mol, more preferably in the range of 0 to 0.05 mol and furthermore preferably in the range of 0 to 0.03 mol with respect to 1.0 mol of the dihydroxy aromatic compound used for manufacture of the cyclic poly(phenylene ether ketone). The used amount of the base in the above preferable range for manufacture of the cyclic poly(phenylene ether ketone) by the manufacturing method (b) enables

sufficient production of the metal salt of the dihydroxy aromatic compound. This also advantageously prevents the progress of undesired reaction, such as degradation reaction of the produced cyclic poly(phenylene ether ketone) by addition of a large excess of the base.

In the reaction of the mixture containing at least the dihalogenated aromatic ketone compound, the base and the organic polar solvent with heating or in the reaction of the mixture containing at least the dihalogenated aromatic ketone compound, the base, the dihydroxy aromatic compound and the organic polar solvent with heating, the reaction temperature depends on the types and the amounts of the dihalogenated aromatic ketone compound, the base and the organic polar solvent and optionally the dihydroxy aromatic compound used for the reaction and is thus not unequivocally specifiable. The reaction temperature may, however, be generally 120 to 350°C, preferably 130 to 320°C and more preferably in the range of 140 to 300°C. This preferable temperature range is likely to achieve the higher reaction rate. The reaction may be a single-stage reaction proceeding at a fixed temperature, a multi-stage reaction proceeding with increasing the temperature stepwise or a continuous-varying reaction proceeding with continuously varying the temperature.

The reaction time depends on the types and the amounts of the materials used and the reaction temperature and is thus not unequivocally specifiable, but may be preferably not less than 0.1 hour, more preferably not less than 0.5 hours and further more preferably not less than 1 hour. The reaction time of not less than this desired value is likely to sufficiently decrease the unreacted material components. On the other hand, there is no specific restriction on the upper limit of the reaction time, but the reaction may sufficiently proceed within 40 hours, more preferably within 10 hours or further preferably within 6 hours.

In the reaction of the mixture containing at least the dihalogenated aromatic ketone compound, the base and the organic polar solvent with heating or in the reaction of the mixture containing at least the dihalogenated aromatic ketone compound, the base, the dihydroxy aromatic compound and the organic polar solvent with heating, a component that does not significantly interfere with the reaction or a component that has the effect of accelerating the reaction may be added to the mixture, in addition to the essential components. There is no specific limitation on the method of the reaction, but the reaction with stirring is preferable. Any of various known polymerization methods and reaction methods, such as batch method and continuous method, may be employed for manufacture of the cyclic poly(phenylene ether ketone) of the invention. The reaction for the manufacture preferably proceeds in a non-oxidizing atmosphere or more specifically in an inert atmosphere such as nitrogen, helium or argon. From the viewpoints of economical efficiency and easy handling, the reaction proceeding in a nitrogen atmosphere is preferable.

The reaction in the presence of a large amount of water in the reaction system is likely to have adverse effects, for example, the decrease in reaction rate and production of a by-product that is not easily separable from the cyclic poly(phenylene ether ketone). It is accordingly important to remove the water contained in the hydrate or the aqueous mixture used as the base and the water produced as a by-product by the reaction, from the reaction system. The water content present in the system during the reaction is preferably not greater than 2.0% by weight, more preferably not greater than 1.0% by weight, furthermore preferably not greater than 0.5% by weight and especially preferably not greater than 0.1% by weight. Dehydration as needed basis is accordingly required to control the water content to or below this desired value. The water content present in the system herein is shown by the weight fraction relative to the total weight of the reaction mixture and may be measured by Karl Fischer Method. The timing of dehydration is not specifically limited but is preferably (1) after mixing the essential components in the manufacturing method (a) or in the manufacturing method (b) or (2) after mixing the essential components other than the dihalogenated aromatic ketone component in the manufacturing method (a) or in the manufacturing method (b). When dehydration is conducted according to the method (2), the cyclic poly(phenylene ether ketone) is produced by adding the dehydrogenated aromatic ketone compound or adding the dehydrogenated aromatic ketone compound and the organic polar solvent after the dehydration. The method of water removal may be any method that can remove water out of the reaction system. The method of water removal may be, for example, dehydration by high temperature heating or by azeotropic distillation with an azeotropic solvent, and the method by azeotropic distillation is especially preferable from the viewpoint of the dehydration efficiency. The azeotropic solvent used for azeotropic distillation may be any organic compound that can form an azeotropic mixture with water, which has the boiling point lower than the boiling point of the organic polar solvent used in the invention. Specific examples of the azeotropic solvent include: hydrocarbon solvents such as hexane, cyclohexane, heptane, benzene, toluene and xylene; and inactive chlorinated aromatic compounds such as chlorobenzene and dichlorobenzene. Among them, toluene and xylene are preferably used as the azeotropic solvent. The amount of the azeotropic solvent is not unequivocally specifiable, since the required amount of the azeotropic solvent for formation of the azeotropic mixture with water depends on the amount of the water present in the system and the type of the solvent. It is, however, preferable to use an excess amount of the solvent that is greater than the required amount for removal of the water present in the reaction system as the azeotropic mixture. More specifically, the amount of the azeotropic solvent is preferably not less than 0.2 liters, more preferably not less than 0.5 liters and furthermore preferably not less than 1.0 liter with respect to 1.0 mol of the dihalogenated aromatic ketone compound in the mixture. There is no specific restriction on the upper limit of the amount of the azeotropic solvent, but the amount of the azeotropic solvent is preferably not

greater than 20.0 liters, more preferably not greater than 10.0 liters and furthermore preferably not greater than 5.0 liters with respect to 1.0 mol of the dihalogenated aromatic ketone compound in the mixture. The excessive used amount of the azeotropic solvent decreases the polarity of the mixture and is accordingly likely to decrease the efficiency of the reaction of the base with the dihalogenated aromatic ketone compound or the efficiency of the reaction of the base with the dihydroxy aromatic compound. The amount of the azeotropic solvent herein is specified as the volume of the solvent at ordinary temperature and pressure. The azeotropic distillation of water according to the principle of a Dean-Stark apparatus enables the amount of the azeotropic solvent to be kept constant in the reaction system and thereby allows reduction of the used amount of the azeotropic solvent. The temperature for removal of water from the reaction system is not unequivocally specifiable, since the boiling point of the azeotropic mixture with water depends on the type of the azeotropic solvent. It is, however, preferable that the temperature for removal of water is not lower than the boiling point of the azeotropic mixture with water but is not higher than the boiling point of the organic polar solvent used for the reaction. More specifically, the temperature for removal of water is in the range of 60 to 170°C, preferably 80 to 170°C, more preferably 100 to 170°C and furthermore preferably in the range of 120 to 170°C. The removal of water may be performed by the method of keeping the temperature constant in the above preferable temperature range, may be performed by the method of increasing the temperature stepwise, or may be performed by the method of continuously varying the temperature. Additionally, above azeotropic distillation under reduced pressure is also preferable. The azeotropic distillation under reduced pressure is likely to enable removal of water with the higher efficiency.

It is preferable to remove the above azeotropic solvent from the system after the azeotropic distillation. The timing of removal of the azeotropic solvent from the system is preferably after completion of the azeotropic distillation of water. Additionally, when dehydration is conducted according to the method (2) described above, the timing of removal of the azeotropic solvent is preferably at the stage before addition of the dihalogenated aromatic ketone compound or before addition of the dihalogenated aromatic ketone compound and the organic polar solvent. A large amount of the azeotropic solvent remaining in the system decreases the polarity of the reaction system and is thereby likely to decrease the reaction rate of production of the cyclic poly(phenylene ether ketone). The removal of the azeotropic solvent is accordingly demanded. The amount of the azeotropic solvent present in the system during the reaction of production of the cyclic poly(phenylene ether ketone) is preferably not greater than 20%, more preferably not greater than 10%, furthermore preferably not greater than 8% and especially preferably not greater than 6% with respect to the organic polar solvent used for the reaction of production of the cyclic poly(phenylene ether ketone). It is important to remove the azeotropic solvent to be not greater than this desired range. Distillation is a preferable method employed for removal of the azeotropic solvent, and an inert gas such as nitrogen, helium or argon may be used as the carrier gas for such distillation. Distillation under reduced pressure is also preferable. The distillation under reduced pressure is likely to enable removal of the azeotropic solvent with the higher efficiency. The temperature for removal of the azeotropic solvent may be any temperature that enables removal of the azeotropic solvent from the reaction system. More specifically, the temperature for removal of the azeotropic solvent is in the range of 60 to 170°C, preferably 100 to 170°C, more preferably 120 to 170°C and furthermore preferably in the range of 140 to 170°C. The removal of the azeotropic solvent may be performed by the method of keeping the temperature constant in the preferable temperature range, may be performed by the method of increasing the temperature stepwise, or may be performed by the method of continuously varying the temperature.

The cyclic poly(phenylene ether ketone) composition of the invention may be obtained by separation and collection from the reaction mixture produced by the manufacturing method described above. The reaction mixture obtained by the above manufacturing method includes at least the cyclic poly(phenylene ether ketone), the linear poly(phenylene ether ketone) and the organic polar solvent and may optionally include the unreacted materials, a by-product salt, water and the azeotropic solvent as the other components. The method of collecting the cyclic poly(phenylene ether ketone) from such reaction mixture is not specifically limited. For example, an available method may remove a portion or a large portion of the organic polar solvent by, for example, distillation, as appropriate and subsequently expose the reaction mixture to a solvent, which has low capability of dissolving the poly(phenylene ether ketone) component, miscibility with the organic polar solvent and capability of dissolving the by-product salt, with heating as appropriate, so as to collect the cyclic poly(phenylene ether ketone) as the solid mixture with the linear poly(phenylene ether ketone). The solvent having such characteristics is generally a solvent having relatively high polarity. The preferable solvent depends on the type of the organic polar solvent used and the type of the by-product salt and is not specifically limited but may include: for example, water; alcohols such as methanol, ethanol, propanol, isopropyl alcohol, butanol and hexanol; ketones such as acetone and methyl ethyl ketone; and acetates such as ethyl acetate and butyl acetate. From the viewpoints of the easy availability and the economical efficiency, water, methanol and acetone are preferable, and water is especially preferable.

Such treatment with the solvent can reduce the amount of the organic polar solvent and the amount of the by-product salt contained in the solid mixture of the cyclic poly(phenylene ether ketone) and the linear poly(phenylene ether ketone). Such treatment causes both the cyclic poly(phenylene ether ketone) and the linear poly(phenylene ether ketone) to deposit as the solid components. The mixture of the cyclic poly(phenylene ether ketone) and the linear poly(phenylene

ether ketone) can thus be collected by a known solid-liquid separation method. The solid-liquid separation method may be, for example, separation by filtration, centrifugal separation or decantation. These series of treatments may be repeated several times as necessary. Such repetition is likely to further reduce the amount of the organic polar solvent and the amount of the by-product salt contained in the solid mixture of the cyclic poly(phenylene ether ketone) and the linear poly(phenylene ether ketone).

The method employed for the treatment with the solvent described above may be a method of mixing the solvent with the reaction mixture under stirring or heating as appropriate. The temperature for the treatment with the solvent is not specifically limited but is preferably in the range of 20 to 220°C and more preferably in the range of 50 to 200°C. This temperature range is preferable, since it facilitates removal of, for example, the by-product salt and enables the treatment under relatively low pressure. When water is used as the solvent, distilled water or deionized water is preferable. The water used as the solvent may, however, be an aqueous solution containing any of: organic acidic compounds such as formic acid, acetic acid, propionic acid, butyric acid, chloroacetic acid, dichloroacetic acid, acrylic acid, crotonic acid, benzoic acid, salicylic acid, oxalic acid, malonic acid, succinic acid, phthalic acid and fumaric acid and their alkali metal salts and alkaline earth metal salts; inorganic acidic compounds such as sulfuric acid, phosphoric acid, hydrochloric acid, carbonic acid and silicic acid; and ammonium ion as appropriate. When the solid mixture of the cyclic poly(phenylene ether ketone) and the linear poly(phenylene ether ketone) obtained after the treatment contains the solvent used for the treatment, the solvent may be removed by, for example, drying as necessary.

The cyclic poly(phenylene ether ketone) is collected as the mixture with the linear poly(phenylene ether ketone) by the above collection method, so that the cyclic poly(phenylene ether ketone) composition is obtained. In order to increase the content of the cyclic poly(phenylene ether ketone) in the composition, a method employed for separation and collection of the cyclic poly(phenylene ether ketone) from this mixture may be a separation method utilizing the difference in solubility between the cyclic poly(phenylene ether ketone) and the linear poly(phenylene ether ketone). More specifically, the method may expose the mixture of the cyclic poly(phenylene ether ketone) and the linear poly(phenylene ether ketone) to a solvent, which has high capability of dissolving the cyclic poly(phenylene ether ketone) but low capability of dissolving the linear poly(phenylene ether ketone), with heating as necessary, so as to obtain the cyclic poly(phenylene ether ketone) as the solvent-soluble component. As is known, the linear poly(phenylene ether ketone) generally has the high crystallinity and the extremely low solubility in solvents. Since there is a significant difference in solubility in the solvent between the cyclic poly(phenylene ether ketone) and the linear poly(phenylene ether ketone), the cyclic poly(phenylene ether ketone) can be obtained with high efficiency by the above method utilizing the difference in solubility.

The solvent used herein is not specifically limited but may be any solvent that is capable of dissolving the cyclic poly(phenylene ether ketone), but may be preferably a solvent that has capability of dissolving the cyclic poly(phenylene ether ketone) but has low capability of dissolving the linear poly(phenylene ether ketone) in the dissolution environment and more preferably a solvent that has incapability of dissolving the linear poly(phenylene ether ketone). The reaction system where the mixture of the cyclic poly(phenylene ether ketone) and the linear poly(phenylene ether ketone) is exposed to the solvent is preferably under ordinary pressure or under slightly increased pressure. Especially preferable is ordinary pressure. The reaction system under such pressure advantageously requires rather inexpensive reaction vessels constituting the reaction system. From this point of view, it is preferable to avoid the pressurized condition requiring expensive pressure vessels as the pressure in the reaction system. The solvent used is preferably a solvent that does not substantially cause any undesired side reaction, such as degradation or cross-linking of the poly(phenylene ether ketone) component. Preferable examples of the solvent used when the mixture is exposed to the solvent under ordinary pressure and reflux condition include: hydrocarbon solvents such as pentane, hexane, heptane, octane, cyclohexane, cyclopentane, benzene, toluene and xylene; halogen solvents such as chloroform, bromoform, methylene chloride, 1,2-dichloroethane, 1,1,1-trichloroethane, chlorobenzene and 2,6-dichlorotoluene; ether solvents such as diethyl ether, tetrahydrofuran and diisopropyl ether; and polar solvents such as N,N-dimethylformamide, N,N-dimethylacetamide, dimethyl sulfoxide, trimethylphosphoric acid and N,N-dimethylimidazolidinone. Among them, preferable are benzene, toluene, xylene, chloroform, bromoform, methylene chloride, 1,2-dichloroethane, 1,1,1-trichloroethane, chlorobenzene, 2,6-dichlorotoluene, diethyl ether, tetrahydrofuran, diisopropyl ether, N,N-dimethylformamide, N,N-dimethylacetamide, dimethyl sulfoxide, trimethylphosphoric acid and N,N-dimethylimidazolidinone. Especially preferable are toluene, xylene, chloroform, methylene chloride and tetrahydrofuran.

The atmosphere where the mixture of the cyclic poly(phenylene ether ketone) and the linear poly(phenylene ether ketone) is exposed to the solvent is not specifically limited, but is preferably a non-oxidizing atmosphere or more specifically an inert atmosphere such as nitrogen, helium or argon. From the viewpoints of economical efficiency and easy handling, a nitrogen atmosphere is especially preferable.

The temperature where the mixture of the cyclic poly(phenylene ether ketone) and the linear poly(phenylene ether ketone) is exposed to the solvent is not specifically limited. In general, the higher temperature is likely to accelerate dissolution of the cyclic poly(phenylene ether ketone) in the solvent. As described previously, it is preferable to expose the mixture of the cyclic poly(phenylene ether ketone) and the linear poly(phenylene ether ketone) to the solvent under

ordinary pressure. The upper limit temperature is thus preferably equal to the reflux temperature of the solvent used under atmospheric pressure. In the application that uses any of the preferable solvents mentioned above, for example, the specific temperature range is 20 to 150°C.

The exposure time when the mixture of the cyclic poly(phenylene ether ketone) and the linear poly(phenylene ether ketone) is exposed to the solvent depends on the type of the solvent used and the temperature and is not unequivocally specifiable. For example, the exposure time is 1 minute to 50 hours. In this range, the cyclic poly(phenylene ether ketone) is likely to be sufficiently dissolved in the solvent.

The method of exposing the mixture described above to the solvent may be any of known general techniques and is not specifically limited. Available methods include: a method of mixing the mixture of the cyclic poly(phenylene ether ketone) and the linear poly(phenylene ether ketone) with the solvent with stirring as appropriate and subsequently collecting the solution portion; a method of spraying the solvent onto the mixture placed on any of various filters and simultaneously dissolving the cyclic poly(phenylene ether ketone) in the solvent; and a method according to the Soxhlet extraction principle. The used amount of the solvent when the mixture of the cyclic poly(phenylene ether ketone) and the linear poly(phenylene ether ketone) is exposed to the solvent is not specifically limited, but may be, for example, a range of 0.5 to 100 as the liquor ratio to the weight of the mixture. The liquor ratio of this range is likely to facilitate homogeneous mixing of the mixture with the solvent and is likely to facilitate sufficient dissolution of the cyclic poly(phenylene ether ketone) in the solvent. In general, the higher liquor ratio is advantageous for dissolution of the cyclic poly(phenylene ether ketone) in the solvent. The excessive liquor ratio, however, does not have any additional advantageous effects, but may, on the contrary, cause economical disadvantages due to the increase in used amount of the solvent. In the application that repeatedly exposes the mixture to the solvent, even the low liquor ratio may often achieve the sufficient advantageous effects. The Soxhlet extraction method has the similar advantageous effects according to its principle and may thus generally require only the low liquor ratio to achieve the sufficient advantageous effects.

After exposure of the mixture of the cyclic poly(phenylene ether ketone) and the linear poly(phenylene ether ketone) to the solvent, the solution in which the cyclic poly(phenylene ether ketone) is dissolved may be obtained as a solid-liquid slurry containing the solid form of the linear poly(phenylene ether ketone). In this case, it is preferable to collect the solution portion by the known solid-liquid separation method. The solid-liquid separation method may be, for example, separation by filtration, centrifugal separation or decantation. Removal of the solvent from the separated solution enables collection of the cyclic poly(phenylene ether ketone). On the other hand, when the cyclic poly(phenylene ether ketone) remains in the solid component, the exposure to the solvent and the collection of the solution may be repeated to increase the yield of the cyclic poly(phenylene ether ketone).

The cyclic poly(phenylene ether ketone) may be obtained as the solid component by removal of the solvent from the cyclic poly(phenylene ether ketone)-containing solution produced as described above. The solution may be removed by, for example, a method of heating under ordinary pressure or a method using a membrane. In order to obtain the high yield of the cyclic poly(phenylene ether ketone) with the high efficiency, the method of heating under ordinary pressure or lower pressure is preferably employed for removal of the solvent. The cyclic poly(phenylene ether ketone)-containing solution produced as described above may contain the solid substance in some temperature condition. In this case, the solid substance also originates from the cyclic poly(phenylene ether ketone). It is accordingly preferable to collect the solid substance with the solvent-soluble component in the course of removal of the solvent. This further increases the yield of the cyclic poly(phenylene ether ketone). The removal of the solvent herein preferably removes at least not less than 50% by weight of the solvent, preferably not less than 70% by weight of the solvent, more preferably not less than 90% by weight of the solvent and furthermore preferably not less than 95% by weight of the solvent. The temperature for removal of the solvent by heating depends on the type of the solvent used and is not unequivocally specifiable, but may be generally 20 to 150°C or preferably in the range of 40 to 120°C. The pressure for removal of the solvent is preferably ordinary pressure or lower pressure. This allows removal of the solvent under low temperature condition.

(3) Thermoplastic resin composition

The resin composition according to the invention is a thermoplastic resin composition comprising: 100 parts by weight of (A) a thermoplastic resin; and 0.5 to 50 parts by weight of (B) a cyclic poly(phenylene ether ketone) that is expressed by the General Formula (VI) given above and has phenylene ketone shown by -Ph-CO- and phenylene ether shown by -Ph-O-as a repeating structural unit.

Addition of the cyclic poly(phenylene ether ketone) to the thermoplastic resin significantly reduces the melt viscosity of the thermoplastic resin and accordingly achieves the effect of the improved flowability of the thermoplastic resin. This effect may be attributed to that the cyclic poly(phenylene ether ketone) has no end-group structure unlike the general linear polymer and thereby has little interaction between molecules. As the cyclic poly(phenylene ether ketone) has little intermolecular interaction, it has small self-cohesive power and is readily micro-dispersible in the thermoplastic resin. In the application of addition to a thermoplastic resin having transparency, the cyclic poly(phenylene ether ketone)

serves to decrease the viscosity, while maintaining the transparency. In the application of addition to a resin having crystallinity, the cyclic poly(phenylene ether ketone) serves as a crystal nucleating agent and achieves the effect of the accelerated crystallization (i.e., reduction in difference between the melting point and the crystallization temperature). These effects are attributed to the ring structure of the cyclic poly(phenylene ether ketone) maintained in the thermoplastic resin composition. It is supposed that the cyclic poly(phenylene ether ketone) may not be subjected to any chemical change such as ring-opening reaction in the manufacturing condition of the thermoplastic resin composition according to the invention.

The addition amount of the cyclic poly(phenylene ether ketone) that is less than 0.5 parts by weight has little effects of the improved flowability, the improved crystallization rate and the improved molding processability in the case of melt processing the resin composition. The addition amount of the cyclic poly(phenylene ether ketone) that is greater than 50 parts by weight, on the other hand, may degrade the properties of the crystalline resin and may cause a significant decrease of the viscosity to reduce the molding processability. The addition amount of the cyclic poly(phenylene ether ketone) should thus be 0.5 to 50 parts by weight and is preferably 0.5 to 20 parts by weight and more preferably 0.5 to 10 parts by weight.

The resin composition of the invention may further contain a fibrous and/or non-fibrous filler. The addition amount of the filler is preferably 0.1 to 200 parts by weight and is more preferably 0.5 to 200 parts by weight respect to 100 parts by weight of the (A) thermoplastic resin of the invention. From the viewpoint of the flowability, the addition amount of the filler is preferably 1 to 150 parts by weight and more preferably 1 to 100 parts by weight. The addition amount of the filler that is not less than 0.1 parts by weight is likely to have the sufficient effect of the improved mechanical strength. The addition amount of the filler that is not greater than 200 parts by weight is likely to improve the flowability and control an increase in weight of the composition.

The filler may be any of various types of fillers including fibrous fillers, plate-like fillers powdery fillers and granular fillers. In order to improve the physical properties of the thermoplastic resin composition, among them, preferable are fibrous fillers such as glass fibers, carbon fibers, potassium titanate whiskers, zinc oxide whiskers, calcium carbonate whiskers, wollastonite whiskers, aluminum borate whiskers, aramid fibers, alumina fibers, silicon carbide fibers, ceramic fibers, asbestos fibers, gypsum fibers and metal fibers. Available examples of the filler other than the fibrous fillers include: silicates such as talc, wollastonite, zeolite, sericite, mica, kaolin, clay, pyrophyllite, bentonite, asbestos and alumina silicate; metal compounds such as silicon oxide, magnesium oxide, alumina, zirconium oxide, titanium oxide and iron oxide; carbonates such as calcium carbonate, magnesium carbonate and dolomite; sulfates such as calcium sulfate and barium sulfate; glass beads; ceramic beads; boron nitride; silicon carbide; calcium phosphate; hydroxides such as calcium hydroxide, magnesium hydroxide and aluminum hydroxide; non-fibrous fillers such as glass flakes, glass powder, carbon black, silica and graphite; smectite clay minerals such as montmorillonite, beidellite, nontronite, saponite, hectorite and sauconite; various clay minerals such as vermiculite, halloysite, kanemite, kenyaite, zirconium phosphate and titanium phosphate; and layer silicates such as Li-fluor-taeniolite, Na-fluor-taeniolite and swellable micas like Na-fluor-tetrasilicic mica and Li-fluor-tetrasilicic mica. The layer silicate may be a layer silicate with interlayer exchangeable cation exchanged with organic onium ion. Examples of the organic onium ion include ammonium ion, phosphonium ion and sulfonium ion. Among them, ammonium ion and phosphonium ion are preferably used, and ammonium ion is especially preferably used. The ammonium ion may be any of primary ammonium ions, secondary ammonium ions, tertiary ammonium ions and quaternary ammonium ions. Examples of the primary ammonium ion include decylammonium, dodecylammonium, octadecylammonium, oleylammonium and benzyl ammonium ions. Examples of the secondary ammonium ion include methyldodecylammonium and methyloctadecylammonium ions. Examples of the tertiary ammonium ion include dimethyldodecylammonium and dimethyloctadecylammonium ions. Examples of the quaternary ammonium ion include: benzyltrialkylammonium ions such as benzyltrimethylammonium, benzyltriethylammonium, benzyltributylammonium, benzyldimethyldodecylammonium and benzyldimethyloctadecylammonium ions; trioctylmethylammonium ion; alkyltrimethylammonium ions such as trimethyloctylammonium, trimethyldodecylammonium and trimethyloctadecylammonium ions; and dimethyldialkylammonium ions such as dimethyldioctylammonium, dimethyldidodecylammonium and dimethyldioctadecylammonium. In addition to these examples, the ammonium ion may be any of those derived from, for example, aniline, p-phenylenediamine, $\alpha$-naphthylamine, p-aminodimethylaniline, benzidine, pyridine, piperidine, 6-aminocaproic acid, 11-aminoundecanoic acid and 12-aminododecanoic acid. Among these ammonium ions, trioctylmethylammonium, trimethyloctadecylammonium, benzyldimethyloctadecylammonium and ammonium ion derived from 12-aminododecanoic acid are preferable. The layer silicate with the interlayer exchangeable cation exchanged with organic onium ion may be produced by reaction of the layer silicate with the interlayer exchangeable cation and the organic onium ion by any of known methods. More specifically, the known method may be, for example, a method by ion exchange reaction in a polar solvent such as water, methanol or ethanol or a method by direct reaction of the layer silicate with an ammonium salt in the liquid form or in the melt state.

Among these fillers, preferable are glass fibers, carbon fibers, talc, wollastonite, montmorillonite and layer silicates such as synthetic micas. Especially preferable are glass fibers and carbon fibers. Two or more different types of these fillers may be used in combination. The type of glass fiber is not specifically limited but may be any glass fiber

that is generally used for reinforcement of resin and may be selected among long fiber types and short fiber types such as chopped strands and milled fibers. The filler may be used as a combination of two or more different fillers. The filler used in the invention may have the surface treated with a known coupling agent (for example, silane coupling agent or titanate coupling agent), a sizing agent (for example, epoxy resin or phenol resin) or another surface treatment agent. The filler may be covered with or sized with a thermoplastic resin such as ethylene/ vinyl acetate copolymer or a thermosetting resin such as epoxy resin. The type of carbon fiber may be any of PAN-type and pitch-type carbon fibers and may be selected among, for example, the long fiber type of roving fibers and the short fiber type of chopped strands.

Additionally, according to the invention, in order to maintain the thermal stability, one or more heat-resistant agents selected among phenol compounds and phosphorus compounds may additionally be contained in the resin composition. The addition amount of the heat-resistant agent is preferably not less than 0.01 part by weight and more preferably not less than 0.02 parts by weight with respect to 100 parts by weight of the (A) thermoplastic resin, in order to achieve the effect of the improved heat resistance. By taking into account the gas component evolved during molding, the addition amount of the heat-resistant agent is preferably not greater than 5 parts by weight and is more preferably not greater than 1 part by weight. The combined use of a phenol compound and a phosphorous compound is especially preferable, in to achieve the significant effects of maintaining the heat resistance, the thermal stability and the flowability.

A hindered phenol compound is preferably used as the phenol compound. Specific examples of the hindered phenol compound include triethyleneglycol-bis[3-t-butyl-(5-methyl-4-hydroxyphenyl)propionate], N,N'-hexamethylenebis(3,5-di-t-butyl-4-hydroxy-hydrocyanamide), tetrakis [methylene- 3-(3',5'-di-t-butyl-4'-hydroxyphenyl)propionate] methane, pentaerythrityltetrakis[3-(3',5'-di-t-butyl-4'-hydroxyphenyl)propionate], 1,3,5-tris(3,5-di-t-butyl-4-hydroxybenzyl)-s-triazine-2,4,6-(1H,3H,5H)-trione, 1,1,3-tris(2-methyl-4-hydroxy-5-t-butylphenyl)butane, 4,4'-butylidenebis(3-methyl-6-t-butylphnol), n-octadecyl-3-(3,5-di-t-butyl-4-hydroxyphenyl)propionate, 3,9-bis[2-(3-(3-t-buyl-4-hydroxy-5-methylphenyl)propionyloxy)-1,1-dimethylethyl-2,4,8,10-tetraoxaspiro[5,5]undecane and 1,3,5-trimethyl-2,4,6-tris-(3,5-di-t-butyl-4-hydroxybenzyl)benzene.

Among them, preferable are N,N'-hexamethylenebis(3,5-di-t-butyl-4-hydroxy-hydrocyanamide) and tetrakis[methylene-3-(3',5'-di-t-butyl-4'-hydroxyphenyl)propionate]methane.

Examples of the phosphorus compound include bis(2,6-di-t-butyl-4-methylphenyl)pentaerythritol diphosphite, bis(2,4-di-t-butylphenyl)pentaerythritol diphosphite, bis(2,4-di-cumylphenyl)pentaerythritol diphosphite, tris(2,4-di-t-butylphenyl) phosphite, tetrakis(2,4-di-t-butylphenyl)-4,4'-bisphenylene phosphite, di-stearylpentaerythritol diphosphite, triphenyl phosphite and diethyl 3,5-di-butyl-4-hydroxybenzylphosphonate. Among them, phosphorus compounds having high melting points are especially preferably used, in order to reduce volatilization and degradation of the heat-resistant agent during compounding of the thermoplastic resin.

Additionally, any of the following compounds may be added in the range that does not damage the advantageous effects of the invention to the thermoplastic resin composition according to the invention. Available examples of additives include: coupling agents such as organo-titanate compounds and organoborane compounds; plasticizers such as poly(alkylene oxide) oligomer compounds, thioether compounds, ester compounds and organophosphorus compounds; crystal nucleating agents such as talc, kaolin and organophosphorus compounds; metal soaps such as montanic acid waxes, lithium stearate and aluminum stearate; mold release agents such as polycondensation products of ethylene diamine/ stearic acid/ sebacic acid and silicone compounds; color protection agents such as hypophosphites; and other general additives including lubricating agents, ultraviolet protection agents, coloring agents, flame retardants and foaming agents. As for any of the above compounds, the addition amount exceeding 20 parts by weight with respect to 100 parts by weight of the entire thermoplastic resin composition of the invention undesirably damages the properties of the thermoplastic resin composition of the invention. The addition amount is thus favorably not greater than 10 parts by weight and more preferably not greater than 1 part by weight.

(4) Manufacturing method of thermoplastic resin composition

The manufacturing method of the thermoplastic resin composition according to the invention is not specifically limited. For example, an applicable method may feed the material mixture to a generally known melt mixing machine, such as a single-screw extruder, a twin-screw extruder, a Banbury mixer, a kneader, or a mixing roll and knead the fed material mixture at temperature of 200 to 400°C. The mixing order of the materials is not specifically limited. For example, an applicable method may premix the thermoplastic resin (A), the cyclic poly(phenylene ether ketone) (B) and optionally the filler and the other additives and homogeneously melt-knead the material mixture with a single-screw extruder or a twin-screw extruder at temperature of not lower than the melting points of the thermoplastic resin and the cyclic poly(phenylene ether ketone) (B). Another applicable method may mix the materials in a solution and remove a solvent. By taking into account the productivity, the method of homogeneously melt-kneading the material mixture with a single-screw extruder or a twin-screw extruder is preferable. More specifically, the preferable method homogeneously melt-kneads the material mixture with a twin-screw extruder at the temperature of not lower than the melting point of the thermoplastic resin and not lower than the melting point of the cyclic poly(phenylene ether ketone) (B).

Any of various kneading methods may be employed for kneading: for example, 1) a method that kneads the thermoplastic resin together with the cyclic poly(phenylene ether ketone); and 2) a method (master pellet method) that produces a resin composition of the thermoplastic resin containing a high concentration of the cyclic poly(phenylene ether ketone)(master pellet), add the thermoplastic resin to the resin composition to adjust the concentration of the poly(phenylene ether ketone) to a specified concentration and melt-knead the mixture. In the application that adds the filler, especially the fibrous filler, in order to reduce breakage of the fibrous filler, a preferable method of manufacturing the thermoplastic resin composition may load the thermoplastic resin composition (A), the cyclic poly(phenylene ether ketone) (B) and the other required additives from the inlet of the extruder and supply the filler from a side feeder to the extruder.

(5) Method of processing the thermoplastic resin composition of the invention

The resin composition of the invention may be molded by any arbitrary method, for example, generally known techniques such as injection molding, extrusion molding, blow molding, press molding and spinning and may be processed to various molded products. The molded products include injection molded products, extrusion molded products, blow molded products, films, sheets and fibers. A known melt film-forming method may be employed to manufacture the film. For example, a method employed for manufacturing the film may melt the resin composition in a single-screw extruder or a twin-screw extruder, extrude the melt resin composition from a film die and cool down the extruded resin composition on a cooling drum to produce an unstretched film. A uniaxial stretching method or a biaxial stretching method may be employed subsequently to appropriately stretch the produced film longitudinally and transversely by a roller-type longitudinal stretching machine and a transverse stretching machine called tenter. The manufacturing method of the film is, however, not limited to these methods.

The fibers include various fibers such as undrawn yarns, drawn yarns and ultra-drawn yarns. A known melt spinning method may be employed to manufacture the fiber from the resin composition of the invention. For example, a method employed for manufacturing the fiber may supply and simultaneously knead chips made of the resin composition as the material to a single-screw extruder or a twin-screw extruder, extrude the kneaded resin composition from a spinneret through a polymer flow line switcher and a filter layer located on an end of the extruder and cool down, draw and heat-set the extruded resin composition. The manufacturing method of the fiber is, however, not limited to this method.

More specifically, by taking advantage of the excellent flowability, the resin composition of the invention can be processed to large-size injection molded products such as automobile parts and injection molded products having the thin-wall portions of 0.01 to 0.1 mm in thickness.

(6) Applications of thermoplastic resin composition

According to the invention, the various molded products described above may be used for various applications including automobile parts, electric and electronic parts, architectural components, various vessels and containers, daily necessities, household goods and sanitary articles. Specific examples of applications include: automobile underhood parts such as air flow meters, air pumps, thermostat housings, engine mounts, ignition bobbins, ignition cases, clutch bobbins, sensor housings, idle speed control valves, vacuum switching valves, ECU housings, vacuum pump cases, inhibitor switches, rotation sensors, acceleration sensors, distributor caps, coil bases, actuator cases for ABS, radiator tank tops and bottoms, cooling fans, fan shrouds, engine covers, cylinder head covers, oil caps, oil pans, oil filters, fuel caps, fuel strainers, distributor caps, vapor canister housings, air cleaner housings, timing belt covers, brake booster parts, various cases, various tubes, various tanks, various hoses, various clips, various valves and various pipes; automobile interior parts such as torque control levers, safety belt parts, register blades, washer levers, window regulator handles, window regulator handle knobs, passing light levers, sun visor brackets, and various motor housings; automobile exterior parts such as roof rails, fenders, garnishes, bumpers, door mirror stays, spoilers, hood louvers, wheel covers, wheel caps, grill apron cover frames, lamp reflectors, lamp bezels, and door handles; various automobile connectors such as wire harness connectors, SMJ connectors, PCB connectors and door grommet connectors; and electric and electronic parts such as relay cases, coil bobbins, optical pickup chassis, motor cases, notebook type personal computer housings and internal parts, CRT display housings and internal parts, printer housings and internal parts, portable terminal housings and internal parts including cell phones, mobile personal computers and handheld mobile devices, recording medium (for example, CD, DVD, PD and FDD) drive housings and internal parts, copying machine housings and internal parts, facsimile housings and internal parts and parabolic antennas. Additionally, applications also include: household and office electric appliance parts such as VTR parts, TV parts, irons, hair dryers, rice cooker parts, microwave oven parts, audio parts, video equipment parts including video cameras and projectors, substrates of optical recording media including Laserdiscs (registered trademark), compact discs (CD), CD-ROM, CD-R, CD-RW, DVD-ROM, DVD-R, DVD-RW, DVD-RAM and Blu-ray discs, lighting and illumination parts, refrigerator parts, air conditioner parts, typewriter parts and word processor parts. Applications further include: housings and internal parts of electronic musical instruments,

home-use game consoles, handheld game consoles; electric and electronic parts such as various gears, various cases, sensors, LEP lamps, connectors, sockets, resistors, relay cases, switches, coil bobbins, capacitors, variable capacitor cases, optical pickups, oscillators, various terminal boards, transformers, plugs, printed wiring boards, tuners, speakers, microphones, headphones, small motors, magnetic head bases, power modules, semiconductors, liquid crystal, FDD carriages, FDD chassis, motor brush holders and transformer components; architectural components such as sliding door rollers, blind curtain parts, pipe joints, curtain liners, blind parts, gas meter parts, water meter parts, water heater parts, roof panels, heat-insulating walls, adjusters, floor posts, ceiling suspenders, stairways, doors and floors; fisheries-related articles such as fishing lines, fishing nets, seaweed culture nets and fish bait bags; civil engineering-related articles such as vegetation nets, vegetation mats, weed growth prevention bags, weed growth prevention nets, protection sheets, slope protection sheets, ash-scattering prevention sheets, drain sheets, water-holding sheets, sludge dewatering bags and concrete forms; machine parts such as gears, screws, springs, bearings, levers, key stems, cams, ratchets, rollers, water supply parts, toy parts, fans, guts, pipes, washing tools, motor parts, microscopes, binoculars, cameras and timepieces; agricultural articles such as multi-films, tunnel films, bird sheets, vegetation protective nonwoven fabrics, seedling raising-pots, vegetation piles, seed tapes, germination sheets, house lining sheets, agricultural vinyl film fasteners, slow-acting fertilizers, root protection sheets, horticultural nets, insect nets, seedling tree nets, printed laminates, fertilizer bags, sample bags, sand bags, animal damage preventive nets, attracting ropes and windbreak nets; sanitary articles such as paper diapers, sanitary napkin packing materials, cotton swabs, rolled damp hand towels and toilet seat-wiping paper sheets; medical articles such as medical nonwoven fabrics (suture region reinforcements, adhesion prevention films, artificial organ repairing materials), wound covers, wound bandages, plaster ground fabrics, surgery sutures, fracture reinforcements and medical films; packaging films of, for example, calendars, stationary, clothing and foods; vessels and tableware such as trays, blisters, knives, forks, spoons, tubes, plastic cans, pouches, containers, tanks and baskets; containers and packages such as hot fill containers, microwave oven cooking container, cosmetics containers, wrapping sheets, foam cushioning materials, paper laminates, shampoo bottles, beverage bottles, cups, candy packs, shrinkable labels, cover materials, window envelopes, fruit baskets, tearable tapes, easy peel packages, egg packs, HDD packages, compost bags, recording medium packages, shopping bags and electric/electronic part wrapping films; various clothing articles such as natural fiber-composite materials, polo shirts, T shirts, innerwear, uniforms, sweaters, socks and stockings and neckties; and interior articles such as curtains, chair covering fabrics, carpets, table cloths, futon mattress wrapping fabrics, wallpapers, and wrapping cloths. Other useful applications include carrier tapes, printed laminates, heat sensitive stencil printing films, mold releasing films, porous films, container bags, credit cards, ATM cards, ID cards, IC cards, hot melt binders of, for example, papers, leathers and nonwoven fabrics, binders for powders such as magnetic materials, zinc sulfide and electrode materials; optical elements, electrically-conductive embossed tapes, IC trays, golf tees, waste bags, plastic shopping bags, various nets, tooth brushes, stationery, drain nets, body towels, hand towels, tea packs, drain filters, clear file folders, coating materials, adhesives, briefcases, chairs, tables, cooler boxes, rakes, hose reels, plant pots, hose nozzles, dining tables, desk surfaces, furniture panels, kitchen cabinets, pen caps, and gas lighters. Especially useful applications include: various automobile connectors such as wire harness connectors, SMJ connectors, PCB connectors and door grommet connectors.

The thermoplastic resin composition of the invention and its molded products are recyclable. For example, a resin composition obtained by pulverizing the resin composition of the invention or its molded products preferably to the powder level and blending additives as appropriate with the powder may be used similarly to the resin composition of the invention and may be processed to a molded product.

Examples

The invention is described more specifically with reference to examples below. These examples are, however, only illustrative and not restrictive in any sense.

[Reference Example 1]

In an autoclave device with a stirrer, 1.1 kg (5 mol) of 4,4'-difluorobenzophenone, 0.55 kg (5 mol) of hydroquinone, 0.69 kg (5 mol) of anhydrous potassium carbonate and 50 liters of N-methyl-2-pyrrolidone were loaded. The amount of N-methyl-2-pyrrolidone with respect to 1.0 mol of the benzene ring component in the mixture was 3.33 liters. After replacement of the inside of a reaction vessel with nitrogen, the reaction proceeded while the temperature of the reaction vessel was raised to 145°C, was kept at 145°C for 1 hour, was further raised to 185°C, was kept at 185°C for 3 hours, was furthermore raised to 250°C and was kept at 250°C for 2 hours. After completion of the reaction, the reaction vessel was cooled down to room temperature, and the reaction mixture was obtained.

The resulting reaction mixture was weighed and was diluted with THF to about 0.1% by weight. A sample for high-performance liquid chromatography analysis was prepared by separating and removing the THF-insoluble component by filtration, and the sample of the reaction mixture was then analyzed. The result of the analysis indicated production

of seven cyclic poly(phenylene ether ketone)s having consecutive repeating numbers m= 2 to 8. The yield of the cyclic poly(phenylene ether ketone) with respect to hydroquinone calculated by absolute calibration method was 20.0%. The weight fraction of the cyclic poly(phenylene ether ketone) of m= 2 with respect to the total weight of the cyclic poly(phenylene ether ketone)s having the repeating numbers m= 2 to 8 was 32%; the weight fraction of m= 3 was 34%; and the weight fraction of m= 4 was 21%.

After 150 kg of a 1% by weight aqueous acetic acid was added to 50 kg of the resulting reaction mixture with stirring to slurry, the mixture was heated to 70°C and was continuously stirred for 30 minutes. The slurry was filtrated with a glass filter (average pore diameter: 10 to 16 μm), and the solid substance was obtained. The procedure of dispersing the resulting solid substance in 50 kg of deionized water, keeping the dispersion at 70°C for 30 minutes and filtering the dispersion to give the solid substance was repeated three times. The resulting solid substance was vacuum-dried overnight at 70°C, so that 1.3 kg of the dried solid was obtained.

Additionally, 1.3 kg of the dried solid obtained by the above procedure was subjected to extraction with 25 kg of chloroform at the bath temperature of 80°C for five hours. The solid substance was obtained by removing chloroform from the resulting extract. The solid substance was dispersed by addition of 2.5 kg of chloroform and was then placed in 40 kg of methanol. The resulting precipitate component was filtrated and was vacuum-dried at 70°C for 3 hours to give a cyclic poly(phenylene ether ketone) B-1. The yield of B-1 was 0.18 kg and the yield with respect to hydroquinone used for the reaction was 14.0%.

The cyclic poly(phenylene ether ketone) B-1 was identified as a compound having phenylene ether ketone unit, based on an absorbing spectrum of infrared spectroscopic analysis. The white powder of the cyclic poly(phenylene ether ketone) B-1 was also identified as a cyclic poly(phenylene ether ketone) mixture mainly consisting of five cyclic poly(phenylene ether ketone)s having consecutive repeating numbers m= 2 to 6, based on the result of mass spectroscopy analysis (apparatus: M-1200H manufactured by Hitachi Ltd.) after component separation by high-performance liquid chromatography and the molecular weight information by MALDI-TOF-MS. The weight fraction of the cyclic poly(phenylene ether ketone) in the cyclic poly(phenylene ether ketone) mixture was 87%. The weight fraction of the cyclic poly(phenylene ether ketone) of m= 2 with respect to the total weight of the cyclic poly(phenylene ether ketone)s having the repeating numbers m= 2 to 8 was 32%; the weight fraction of m= 3 was 34%; and the weight fraction of m= 4 was 21%. The component other than the cyclic poly(phenylene ether ketone) in the cyclic poly(phenylene ether ketone) mixture was linear poly(phenylene ether ketone) oligomers.

As the result of measurement of the melting point, this cyclic poly(phenylene ether ketone) B-1 had the melting point of 162°C. And as the result of measurement of the reduced viscosity, the cyclic poly(phenylene ether ketone) B-1 had the reduced viscosity of less than 0.02 dL/g.

[Reference Example 2]

In a four-necked flask equipped with a stirrer, a nitrogen inlet tube, a Dean-Stark apparatus, a condenser tube and a thermometer, 22.5 g (103 mmol) of 4,4'-difluorobenzophenone, 11.0 g (100 mmol) of hydroquinone and 49 g of diphenyl sulfone were loaded. The amount of diphenyl sulfone with respect to 1.0 mol of the benzene ring component in the mixture was about 0.16 liters. A substantially colorless solution was obtained by heating the mixture to 140°C under nitrogen flow. At this temperature, 10.6 g (100 mmol) of anhydrous sodium carbonate and 0.28 g (2 mmol) of anhydrous potassium carbonate were added to the solution. The temperature of the mixture was raised to 200°C, was kept at 200°C for 1 hour, was further raised to 250°C, was kept at 250°C for 1 hour, was further raised to 315°C and was kept at 315°C for 2 hours.

About 0.2 g of the resulting reaction mixture was weighed, was diluted with about 4.5 g of THF. A sample for high-performance liquid chromatography analysis was prepared by separating and removing the THF-insoluble component by filtration, and the sample of the reaction mixture was then analyzed. The yield of the cyclic poly(phenylene ether ketone) with respect to hydroquinone calculated by absolute calibration method was, however, the tracing amount of less than 0.8%. No significant amount of the cyclic poly(phenylene ether ketone) having the repeating number m= 2 was detected.

The reaction mixture was cooled down, was crushed, and was washed with water and acetone several times for removal of by-product salts and diphenyl sulfone. The resulting polymer was dried at 120°C in an air dryer to give a powder B-2.

As the result of measurement of the melting point, the resulting linear poly(phenylene ether ketone) B-2 had the melting point of 334°C. And as the result of measurement of the reduced viscosity, the linear poly(phenylene ether ketone) B-2 had the reduced viscosity of less than 0.54 dL/g.

The following conditions were employed for high-performance liquid chromatography, measurement of the reduced viscosity and measurement of the melting point of poly(phenylene ether ketone):

<High-performance liquid chromatography>

Apparatus: LC-10Avp Series manufactured by Shimadzu Corporation
Column: Mightysil RP-18GP150-4.6
Detector: photodiode array detector (using UV= 270 nm)
Flow rate: 1.0 mL/min
Column temperature: 40°C
Sample: 0.1% by weight THF solution
Mobile phase: THF/ 0.1 w% aqueous trifluoroacetic acid

<Reduced Viscosity>

Viscometer: Ostwald viscometer
Solvent: 98% by weight sulfuric acid
Sample concentration: 0.1 g/dL (sample weight/ solvent volume)
Measuring temperature: 25°C
Reduced viscosity calculation equation: $\eta = \{(t/t0) - 1\}/ C$
t: sample solution transit time in seconds
t0: solvent transit time in seconds
C: solution concentration

<Measurement of melting point of poly(phenylene ether ketone)

The melting point of poly(phenylene ether ketone) was measured with robot DSC RDC 220 manufactured by Seiko Instruments Inc. in a nitrogen atmosphere under the following measuring conditions:

* holding at 50°C × 1 minute
* raising temperature from 50°C to 360°C, rate of temperature increase: 20°C/ minute

[Table 1]

| REFERFENCE EXAMPLES | | PURITY OF CYCLIC PEEK MIXTURE (%) | AMOUNTS OF CYCLIC PEEK COMPONENTS WITH m (% by weight) | | | | Tm (°C) |
|---|---|---|---|---|---|---|---|
| | | | 2 | 3 | 4 | ≥5 and ≤8 | |
| REFERENCE EXAMPLE 1 | B-1 | 87.0 | 32.0 | 34.0 | 21.0 | 13.0 | 162 |
| REFERENCE EXAMPLE 2 (USING COMPARATIVE EXAMPLE) | B-2 | LINEAR PEEK | - | - | - | - | 334 |

[Examples 1 to 19, Comparative Examples 1 to 24]

After the respective components were dry-blended at the fractions specified in Tables 2 to 4, the mixture was fed from an extruder main feeder. The mixture was melt-kneaded at the screw rotation speed of 200 rpm in a twin-screw extruder TEX 30 manufactured by the Japan Steel Works, LTD. at the set cylinder temperature in Tables. The guts ejected from a die were immediately cooled down in a water bath and were cut by a strand cutter to pellets. The pellets obtained in Examples 7, 8, 12, 16 and 17 and Comparative Examples 6 to 9, 16, 17, 21 and 22 were vacuum-dried at 80°C for 12 hours and were then evaluated as described below. The other pellets were dried with hot air at 120°C for 5 hours and were then evaluated as described below.

[Examples 20 to 25, Comparative Examples 25 to 31]

After the thermoplastic resin composition and the poly(phenylene ether ketone) obtained in Reference Example 1 or Reference Example 2 were dry-blended at the fractions specified in Table 5, the mixture was fed from an extruder main feeder with a filler supplied from an extruder side feeder. The mixture was melt-kneaded at the screw rotation

speed of 200 rpm in a twin-screw extruder TEX 30 manufactured by the Japan Steel Works, LTD. at the set cylinder temperature in Tables. The guts ejected from a die were immediately cooled down in a water bath and were cut by a strand cutter to pellets. The pellets obtained in Examples 22 and 23 and Comparative Examples 28 and 29 were vacuum-dried at 80°C for 12 hours and were then evaluated as described below. The other pellets were dried with hot air at 120°C for 5 hours and were then evaluated as described below.

The poly(phenylene ether ketone) (B) used in Examples and Comparative Examples hereof were as follows:

B-1: Reference Example 1
B-2: Reference Example 2

The thermoplastic resins (A) used herein were as follows:

A-1: poly(phenylene ether ether ketone) resin of Tm= 338°C, Tc= 287°C (Tm - Tc= 51°C) and Tg= 143°C (450G manufactured by Victrex plc)
A-2: polyphenylene sulfide resin of Tm= 278°C, Tc= 215°C (Tm - Tc= 63°C), Tg= 88°C and MFR= 200 g/10 minutes (315.5°C, 5 kg load) (M2588 manufactured by Toray Industries, Inc.)
A-3: nylon 6 resin of Tm= 225°C, Tc= 177°C (Tm - Tc= 48°C), Tg= 58°C and relative viscosity of 2.80 at the concentration of 1 g/dl in 98% sulfuric acid (CM1010 manufactured by Toray Industries, Inc.)
A-4: nylon 66 resin of Tm= 265°C, Tc= 227°C (Tm - Tc= 38°C), Tg= 63°C and relative viscosity of 2.95 at the concentration of 1 g/dl in 98% sulfuric acid (CM3001N manufactured by Toray Industries, Inc.)
A-5: polyethylene terephthalate resin of Tm= 255°C, Tc= 178°C (Tm - Tc= 77°C), Tg= 81°C and intrinsic viscosity of 1.15 (T704T manufactured by Toray Industries, Inc.)
A-6: polybutylene terephthalate resin of Tm= 226°C, Tc= 188°C (Tm - Tc= 38°C), Tg= 25°C and intrinsic viscosity of 0.85 (1100S manufactured by Toray Industries, Inc.)
A-7: polycarbonate resin of glass transition temperature of 152°C and total light transmittance of 89% (A2500 manufactured by Idemitsu Kosan Co., Ltd.)
A-8: transparent ABS resin of glass transition temperature of 103°C and total light transmittance of 87% (920 manufactured by Toray Industries, Inc.) (The transparent ABS resin is a resin made of a rubber polymer and a styrene copolymer and accordingly has a plurality of glass transition temperatures. The melt processing temperature of the transparent ABS resin was determined according to the glass transition temperature of 103°C of the styrene copolymer as the matrix).

The fillers used herein were as follows:

C-1: glass fiber (ECS03T-790DE manufactured by Nippon Electric Glass Co., Ltd.)
C-2: glass fiber (T-249 manufactured by Nippon Electric Glass Co., Ltd.)
C-3: glass fiber (T-289 manufactured by Nippon Electric Glass Co., Ltd.)
C-4: glass fiber (CS3J948 manufactured by Nitto Boseki Co., Ltd.)
C-5: glass fiber (T-747 manufactured by Nippon Electric Glass Co., Ltd.)
C-6: carbon fiber (TS12-006 manufactured by Toray Industries, Inc.)

<Evaluation of Flowability>

In order to evaluate the flowability, pellets were loaded to a cylinder of a capillary melt viscosity measuring apparatus (CAPIROGRAPH-1C manufactured by Toyo Seiki Seisaku-sho, Ltd.) and were melted for 5 minutes at a shear rate of 100 $sec^{-1}$ under the following conditions. The melt viscosity (Pa·s) was then measured as the index of evaluation of the flowability.

* poly(phenylene ether ether ketone) resin: cylinder temperature of 400°C, orifice L/D= 20 mm (inner diameter: 1 mm)
* polyphenylene sulfide resin: cylinder temperature of 300°C, orifice L/D= 20 mm (inner diameter: 1 mm)
* nylon 6 resin: cylinder temperature of 250°C, orifice L/D= 10 mm (inner diameter: 1 mm)
* nylon 6,6 resin: cylinder temperature of 290°C, orifice L/D= 10 mm (inner diameter: 1 mm)
* polybutylene terephthalate resin: cylinder temperature of 250°C, orifice L/D= 20 mm (inner diameter: 1 mm)
* polyethylene terephthalate resin: cylinder temperature of 280°C, orifice L/D= 20 mm (inner diameter: 1 mm)
* polycarbonate resin: cylinder temperature of 300°C, orifice L/D= 10 mm (inner diameter: 1 mm)
* ABS resin: cylinder temperature of 220°C, orifice L/D= 10 mm (inner diameter: 0.5 mm)

<Evaluation of crystallization characteristics (with respect to only crystalline resins)>

The thermal characteristics were measured with using a differential scanning calorimeters (DSC) Q200 manufactured by TA instruments. The following measuring conditions were employed. The values of the 1st Run were used for the crystallization temperature (Tc) during temperature decrease and the glass transition temperature (Tg), and the value of the 2nd Run was used for the melting point (Tm). The value of Tm - Tc was used as the index indicating the crystallization characteristics. The smaller value of Tm - Tc indicates the higher crystallization rate.

First Run

* holding at 50°C × 1 minute
* raising temperature from 50°C to melting point + 20°C, rate of temperature increase: 20°C/ minute
* holding at melting point + 20°C × 1 minute
* decreasing temperature from melting point + 20°C to glass transition temperature + 20°C, rate of temperature decrease: 20°C/ minute (The crystallization peak temperature in this phase was specified as Tc).

Second Run

* holding at glass transition temperature + 20°C × 1 minute
* raising temperature from glass transition temperature + 20°C to melting point + 20°C, rate of temperature increase: 20°C/ minute (The melt peak temperature in this phase was specified as Tm).

<Evaluation of Transparency (with respect to only amorphous resins)>

The obtained thermoplastic resin was injection molded by using SG75H-MIV manufactured by Sumitomo Heavy Industries, Ltd. at the cylinder temperature of the glass transition temperature of the thermoplastic resin + 100° to 200°C and the mold temperature of 40°C. The total light transmittance of the resulting molded product of 70 mm× 70 mm× 2 mm was measured with a direct-reading haze meter manufactured by Toyo Seiki Seisaku-sho, Ltd under the temperature condition of 23°C. The higher transmittance indicates the better transparency.

<Measurement of tensile strength>

According to ASTM D-638, each ASTM 1 dumbbell test specimen was subjected to tensile test with a tensile tester TENSILON UTA-2.5T (manufactured by ORIENTEC Co., LTD). under the conditions of gauge length of 114 mm and strain rate of 10 mm/ min in a constant temperature and humidity room of room temperature of 23°C and humidity of 50%. The dumbbell test specimen was produced by injection molding (SG75H-MIV manufactured by Sumitomo Heavy Industries, Ltd).

[Table 2]

| | | | EXAMPLES | | | | | | | | | | | |
|---|---|---|---|---|---|---|---|---|---|---|---|---|---|---|
| | | | 1 | 2 | 3 | 4 | 5 | 6 | 7 | 8 | 9 | 10 | 11 | 12 |
| THERMOPLASTIC RESIN | A-1 | parts by weight | 99.5 | 99 | 98 | 95 | 90 | - | - | - | - | - | - | - |
| | A-2 | parts by weight | - | - | - | - | - | 99 | - | - | - | - | - | - |
| | A-3 | parts by weight | - | - | - | - | - | - | 99 | - | - | - | - | - |
| | A-4 | parts by weight | - | - | - | - | - | - | - | 99 | - | - | - | - |
| | A-5 | parts by weight | - | - | - | - | - | - | - | - | 99 | - | - | - |
| | A-6 | parts by weight | - | - | - | - | - | - | - | - | - | 99 | - | - |
| | A-7 | parts by weight | - | - | - | - | - | - | - | - | - | - | 99 | - |
| | A-8 | parts by weight | - | - | - | - | - | - | - | - | - | - | - | 99 |
| PEEK | B-1 | parts by weight | 0.5 | 1 | 2 | 5 | 10 | 1 | 1 | 1 | 1 | 1 | 1 | 1 |
| | | parts by weight[1)] | 0.5 | 1 | 2 | 5 | 11 | 1 | 1 | 1 | 1 | 1 | 1 | 1 |
| MELT PROCESSING CONDITIONS | CYLINDER TEMPERATURE | °C | 400 | 400 | 400 | 400 | 400 | 300 | 250 | 280 | 280 | 250 | 300 | 220 |
| MELT VISCOSITY (MEASURING TEMPERATURE) | | Pa·s (°C) | 520 (400) | 470 (400) | 420 (400) | 350 (400) | 300 (400) | 150 (300) | 130 (250) | 140 (280) | 590 (280) | 120 (250) | 520 (300) | 740 (220) |
| Tm-Tc | | °C | 44 | 43 | 41 | 40 | 35 | 48 | 31 | 25 | 48 | 26 | - | - |
| TOTAL LIGHT TRANSMITTANCE | | % | - | - | - | - | - | - | - | - | - | - | 88 | 87 |

1) content with respect to 100 parts by weight of thermoplastic resin

[Table 3]

| | | | COMPARATIVE EXAMPLES | | | | | | | | | | | | | | | | |
|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 |
| THERMOPLASTIC RESIN | A-1 | parts by weight | 100 | 99.8 | 99 | - | - | - | - | - | - | - | - | - | - | - | - | - | - |
| | A-2 | parts by weight | - | - | - | 100 | 99 | - | - | - | - | - | - | - | - | - | - | - | - |
| | A-3 | parts by weight | - | - | - | - | - | 100 | 99 | - | - | - | - | - | - | - | - | - | - |
| | A-4 | parts by weight | - | - | - | - | - | - | - | 100 | 99 | - | - | - | - | - | - | - | - |
| | A-5 | parts by weight | - | - | - | - | - | - | - | - | - | 100 | 99 | - | - | - | - | - | - |
| | A-6 | parts by weight | - | - | - | - | - | - | - | - | - | - | - | 100 | 99 | - | - | - | - |
| | A-7 | parts by weight | - | - | - | - | - | - | - | - | - | - | - | - | - | 100 | 99 | - | - |
| | A-8 | parts by weight | - | - | - | - | - | - | - | - | - | - | - | - | - | - | - | 100 | 99 |
| PEEK | B-1 | parts by weight | - | 0.2 | - | - | - | - | - | - | - | - | - | - | - | - | - | - | - |
| | B-2 | parts by weight | - | - | 1 | - | 1 | - | 1 | - | 1 | - | 1 | - | 1 | - | 1 | - | 1 |
| | | parts by weight[1)] | - | 0.2 | 1 | - | 1 | - | 1 | - | 1 | - | 1 | - | 1 | - | 1 | - | 1 |
| MELT PROCESSING CONDITIONS | CYLINDER TEMPERATURE | °C | 400 | 400 | 400 | 300 | 300 | 250 | 250 | 280 | 280 | 280 | 280 | 250 | 250 | 300 | 300 | 220 | 220 |
| MELT VISCOSITY (MEASURING TEMPERATURE) | | Pa·s (°C) | 620 (400) | 610 (400) | 610 (400) | 220 (300) | 210 (300) | 180 (250) | 180 (250) | 200 (280) | 190 (280) | 750 (280) | 740 (280) | 190 (250) | 200 (250) | 680 (300) | 660 (300) | 920 (220) | 930 (220) |
| Tm-Tc | | °C | 51 | 50 | 50 | 63 | 61 | 48 | 46 | 38 | 36 | 77 | 75 | 38 | 37 | - | - | - | - |

(continued)

| | | COMPARATIVE EXAMPLES | | | | | | | | | | | | | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 |
| TOTAL LIGHT TRANSMITTANCE | % | - | - | - | - | - | - | - | - | - | - | - | - | - | 89 | 75 | 87 | 64 |
| 1) content with respect to 100 parts by weight of thermoplastic resin | | | | | | | | | | | | | | | | | | |

[Table 4]

| | | | EXAMPLES | | | | | | | COMPARATIVE EXAMPLES | | | | | | |
|---|---|---|---|---|---|---|---|---|---|---|---|---|---|---|---|---|
| | | | 13 | 14 | 15 | 16 | 17 | 18 | 19 | 18 | 19 | 20 | 21 | 22 | 23 | 24 |
| THERMOPLAs-TIC RESIN | A-1 | parts by weight | 99 | 95 | - | - | - | - | - | 100 | 99 | - | - | - | - | - |
| | A-2 | parts by weight | - | - | 99 | - | - | - | - | - | - | 100 | - | - | - | - |
| | A-3 | parts by weight | - | - | - | 99 | - | - | - | - | - | - | 100 | - | - | - |
| | A-4 | parts by weight | - | - | - | - | 99 | - | - | - | - | - | - | 100 | - | - |
| | A-6 | parts by weight | - | - | - | - | - | 99 | - | - | - | - | - | - | 100 | - |
| | A-7 | parts by weight | - | - | - | - | - | - | 99 | 99 | 99 | 99 | 99 | 99 | 99 | 100 |
| PEEK | B-1 | parts by weight | 1 | 5 | 1 | 1 | 1- | 1 | 1 | - | - | - | - | - | - | - |
| | B-2 | parts by weight | - | - | - | - | - | - | - | - | 1 | - | - | - | - | - |
| | | parts by weight 1) | 1 | 5 | 1 | 1 | 1 | 1 | 1 | - | 1 | - | - | - | - | - |

(continued)

| | | | EXAMPLES | | | | | | | COMPARATIVE EXAMPLES | | | | | | |
|---|---|---|---|---|---|---|---|---|---|---|---|---|---|---|---|---|
| | | | 13 | 14 | 15 | 16 | 17 | 18 | 19 | 18 | 19 | 20 | 21 | 22 | 23 | 24 |
| FILLER | C-1 | parts by weight | 50 | 50 | - | - | - | - | - | 50 | 50 | - | - | - | - | - |
| | C-2 | parts by weight | - | - | - | 60 | - | - | - | - | - | - | - | - | - | - |
| | C-3 | parts by weight | - | - | - | - | - | - | - | - | - | - | - | - | - | - |
| | C-4 | parts by weight | - | - | - | - | - | 50 | 60 | - | - | - | - | - | 50 | 60 |
| | C-5 | parts by weight | - | - | 50 | - | 60 | - | - | - | - | 50 | - | 60 | - | - |
| | | parts by weight[1)] | 51 | 53 | 51 | 61 | 61 | 51 | 61 | 50 | 51 | 50 | 60 | 60 | 50 | 60 |
| MELT PROCESSING CONDITIONS | CYLINDER TEMPERATURE | °C | 400 | 400 | 300 | 250 | 280 | 250 | 300 | 400 | 400 | 300 | 250 | 280 | 250 | 300 |
| MELT VISCOSITY (MEASURING TEMPERATURE) | | Pa·s (°C) | 720 (400) | 600 (400) | 660 (300) | 520 (250) | 450 (280) | 470 (250) | 860 (300) | 1010 (400) | 990 (400) | 970 (300) | 720 (250) | 640 (280) | 690 (250) | 1200 (300) |
| TENSILE STRENGTH | | MPa | 182 | 185 | 214 | 180 | 201 | 145 | 114 | 173 | 175 | 204 | 171 | 193 | 139 | 107 |

1) content with respect to 100 parts by weight of thermoplastic resin

[Table 5]

| | | | EXAMPLES | | | | | | COMPARATIVE EXAMPLES | | | | | | |
|---|---|---|---|---|---|---|---|---|---|---|---|---|---|---|---|
| | | | 20 | 21 | 22 | 23 | 24 | 25 | 25 | 26 | 27 | 28 | 29 | 30 | 31 |
| THERMOPLASTIC RESIN | A-1 | parts by weight | 99 | - | - | - | - | - | 100 | 99 | - | - | - | - | - |
| | A-2 | parts by weight | - | 99 | - | - | - | - | - | - | 100 | - | - | - | - |
| | A-3 | parts by weight | - | - | 99 | - | - | - | - | - | - | 100 | - | - | - |
| | A-4 | parts by weight | - | - | - | 99 | - | - | - | - | - | - | 100 | - | - |
| | A-6 | parts by weight | - | - | - | - | 99 | - | - | - | - | - | - | 100 | - |
| | A-7 | parts by weight | - | - | - | - | - | 99 | - | - | - | - | - | - | 100 |
| PEEK | B-1 | parts by weight | 1 | 1 | 1 | 1 | 1 | 1 | - | - | - | - | - | - | - |
| | B-2 | parts by weight | - | - | - | - | - | - | - | 1 | - | - | - | - | - |
| | | parts by weight1) | 1 | - | - | 1 | - | - | - | 1 | - | - | - | - | - |
| FILLER | C-6 | parts by weight | 40 | 40 | 40 | 40 | 40 | 40 | 40 | 40 | 40 | 40 | 40 | 40 | 40 |
| | | parts by weight1) | 40 | 40 | 40 | 40 | 40 | 40 | 40 | 40 | 40 | 40 | 40 | 40 | 40 |
| MELT PROCESSING CONDITIONS | CYLINDER TEMPERATURE | °C | 400 | 300 | 250 | 280 | 250 | 300 | 400 | 400 | 300 | 250 | 280 | 250 | 300 |
| MELT VISCOSITY (MEASURING TEMPERATURE) | | Pa·s (°C) | 1180 (400) | 1010 (300) | 810 (250) | 660 (280) | 710 (250) | 1190 (300) | 1530 (400) | 1510 (400) | 1340 (300) | 1050 (250) | 890 (280) | 930 (250) | 1680 (300) |
| TENSILE STRENGTH | | MPa | 231 | 238 | 165 | 196 | 160 | 125 | 220 | 222 | 228 | 158 | 187 | 154 | 116 |

1) content with respect to 100 parts by weight of thermoplastic resin

The results of Tables 2 to 5 show that the thermoplastic resin composition of the invention containing the cyclic poly(phenylene ether ketone) has the extremely lower melt viscosity and the higher molding processability, compared with a thermoplastic resin composition containing no cyclic poly(phenylene ether ketone) or a thermoplastic resin composition containing the linear poly(phenylene ether ketone). It is also shown that blending the cyclic poly(phenylene ether ketone) with the crystalline resin has the effect of accelerating the crystallization, in addition to the decrease of melt viscosity. Additionally, blending the cyclic poly(phenylene ether ketone) with the amorphous resin has the effect of decreasing the melt viscosity, while maintaining the transparency. The content of the cyclic poly(phenylene ether ketone) that is less than 0.5 parts by weight, however, does not have the above effects.

The above effects may be attributed to that the cyclic poly(phenylene ether ketone) has the lower melting point than the linear poly(phenylene ether ketone), is in the melt state to allow micro-dispersion at the processing temperature of the thermoplastic resin, and has little intermolecular interaction such as tangling due to the absence of end-group structure.

The effect of decreasing the melt viscosity by addition of the cyclic poly(phenylene ether ketone) is significantly observed in a fiber-reinforced thermoplastic resin composition containing glass fibers or carbon fibers. This effect is obvious, compared with the comparative examples. Additionally, the fiber-reinforced thermoplastic resin composition containing the cyclic poly(phenylene ether ketone) has the higher physical properties, compared with a fiber-reinforced thermoplastic resin composition without the cyclic poly(phenylene ether ketone). This may be attributed to that the reduced viscosity of the thermoplastic resin composition by addition of the cyclic poly(phenylene ether ketone) results in decreasing the shear stress in melt kneading and thereby preventing thermal degradation of the matrix resin and breakage of the fibrous filler.

## Claims

**1.** A thermoplastic resin composition, comprising:

100 parts by weight of (A) a thermoplastic resin which is at least one selected among a poly(phenylene ether ether ketone) resin, a polyphenylene sulfide resin, a polyamide resin, a polyester resin, a polycarbonate resin and a polystyrene resin; and

0.5 to 50 parts by weight of (B) at least one cyclic poly(phenylene ether ketone) that is expressed by General Formula (I) given below and has phenylene ketone shown by -Ph-CO- and phenylene ether shown by -Ph-O- as a repeating structural unit:

[Chem. 1]

$$\left[ \left( \mathrm{Ph}-\overset{\displaystyle O}{\overset{\|}{C}} \right)_o \left( \mathrm{Ph}-O \right)_p \right]_m \qquad \text{(I)}$$

, in which Ph in Formula (I) represents a para-phenylene structure; o and p are respectively integral numbers of not less than 1; and m is an integral number of 2 to 40, and wherein the (B) cyclic poly (phenylene ether ketone) has a melting point of not higher than 270°C.

**2.** The thermoplastic resin composition according to claim 1, wherein the (B) cyclic poly(phenylene ether ketone) is a mixture containing not less than 5 % by weight of a cyclic poly(phenylene ether ketone) having a repeating number m= 2 and not less than 5% by weight of a cyclic poly(phenylene ether ketone) having a repeating number m= 3 with respect to a total weight 100% of cyclic poly(phenylene ether ketone)s having repeating numbers m= 2 to 8 in the General Formula (I).

**3.** The thermoplastic resin composition according to either one of claims 1 and 2, wherein the (B) cyclic poly(phenylene ether ketone) is a mixture of cyclic poly(phenylene ether ketone)s having at least three different repeating numbers m.

**4.** The thermoplastic resin composition according to any one of claims 1 to 3, wherein the (B) cyclic poly(phenylene ether ketone) is a cyclic poly(phenylene ether ether ketone) expressed by General Formula (II) given below:

[Chem. 2]

(II)

(wherein m in Formula is an integral number of 2 to 40).

**5.** The thermoplastic resin composition according to any one of claims 1 to 4, wherein the (B) cyclic poly(phenylene ether ketone) has a melting point of not higher than 250°C.

**6.** The thermoplastic resin composition according to any one of claims 1 to 5, wherein the (B) cyclic poly(phenylene ether ketone) has a melting point of not higher than 230°C.

**7.** The thermoplastic resin composition according to any one of claims 1 to 6, further comprising:

0.1 to 200 parts by weight of (C) a filler with respect to 100 parts by weight of the (A) thermoplastic resin.

**8.** The thermoplastic resin composition according to any one of claims 1 to 7, wherein the (C) filler includes at least a fibrous filler.

**9.** The thermoplastic resin composition according to claim 8, wherein the (C) filler is a glass fiber and/or a carbon fiber.

**10.** A molded product produced by melt molding the resin composition according to any one of claims 1 to 9.

**Patentansprüche**

**1.** Thermoplastische Harzzusammensetzung, die Folgendes umfasst:

100 Gewichtsteile (A) eines thermoplastischen Harzes, das zumindest ein aus einem Poly(phenylenetheretherketon)harz, einem Polyphenylensulfidharz, einem Polyamidharz, einem Polyesterharz, einem Polycarbonatharz und einem Polystyrolharz ausgewähltes ist; und
0,5 bis 50 Gewichtsteile (B) zumindest eines zyklischen Poly(phenylenetherketon)s, das durch die nachstehend angegebene allgemeine Formel (I) ausgedrückt wird und durch -Ph-CO- dargestelltes Phenylenketon sowie durch -Ph-O- dargestellten Phenylenether als sich wiederholende Struktureinheit aufweist:

[Chem. 1]

(I)

worin Ph in Formel (I) für eine para-Phenylenstruktur steht; o und p jeweils ganze Zahlen sind, aber nicht weniger als 1; und m eine ganze Zahl von 2 bis 40 ist, und worin das (B) zyklische Poly(phenylenetherketon) einen Schmelzpunkt von nicht mehr als 270 °C aufweist.

**2.** Thermoplastische Harzzusammensetzung nach Anspruch 1, worin:

das (B) zyklische Poly(phenylenetherketon) ein Gemisch ist, das nicht weniger als 5 Gew.-% eines zyklischen Poly(phenylenetherketon)s mit einer Wiederholungszahl m = 2 und nicht weniger als 5 Gew.-% eines zyklischen Poly(phenylenetherketon)s mit einer Wiederholungszahl m = 3, bezogen auf ein Gesamtgewicht von 100 %

zyklischen Poly(phenylenetherketon)en mit Wiederholungszahlen m = 2 bis 8 in der allgemeinen Formel (I), enthält.

**3.** Thermoplastische Harzzusammensetzung nach einem der Ansprüche 1 und 2, worin:

das (B) zyklische Poly(phenylenetherketon) ein Gemisch aus zyklischen Poly-(phenylenetherketon)en mit zumindest drei verschiedenen Wiederholungszahlen m ist.

**4.** Thermoplastische Harzzusammensetzung nach einem der Ansprüche 1 bis 3, worin:

das (B) zyklische Poly(phenylenetherketon) ein durch die nachstehend angegebene allgemeine Formel (II) ausgedrücktes zyklisches Poly(phenylenetheretherketon) ist:

[Chem. 2]

(II)

(worin m in der Formel eine ganze Zahl von 2 bis 40 ist).

**5.** Thermoplastische Harzzusammensetzung nach einem der Ansprüche 1 bis 4, worin:

das (B) zyklische Poly(phenylenetherketon) einen Schmelzpunkt von nicht mehr als 250 °C aufweist.

**6.** Thermoplastische Harzzusammensetzung nach einem der Ansprüche 1 bis 5, worin:

das (B) zyklische Poly(phenylenetherketon) einen Schmelzpunkt von nicht mehr als 230 °C aufweist.

**7.** Thermoplastische Harzzusammensetzung nach einem der Ansprüche 1 bis 6, die des Weiteren Folgendes umfasst:

0,1 bis 200 Gewichtsteile (C) eines Füllstoffs, bezogen auf 100 Gewichtsteile des (A) thermoplastischen Harzes.

**8.** Thermoplastische Harzzusammensetzung nach einem der Ansprüche 1 bis 7, worin:

der (C) Füllstoff zumindest einen Faserfüllstoff umfasst.

**9.** Thermoplastische Harzzusammensetzung nach Anspruch 8, worin:

der (C) Füllstoff eine Glasfaser und/oder eine Kohlefaser ist.

**10.** Formprodukt, hergestellt durch Schmelzformen einer Harzzusammensetzung nach einem der Ansprüche 1 bis 9.

## Revendications

**1.** Composition de résine thermoplastique, comprenant :

100 parties en poids de (A) une résine thermoplastique qui est au moins l'une choisie parmi une résine poly(phénylène-éther-éther-cétone), une résine poly(sulfure de phénylène), une résine polyamide, une résine polyester, une résine polycarbonate et une résine polystyrène ; et
0,5 à 50 parties en poids de (B) au moins une poly(phénylène-éther-cétone) cyclique qui est représentée par la formule générale (I) décrite ci-dessous et comporte une phénylène-cétone représentée par -Ph-CO- et un phénylène-éther représenté par -Ph-O- en tant que motif structural de répétition :

[Chim. 1]

$$\left[ \left( \text{Ph-}\overset{\text{O}}{\overset{\|}{\text{C}}} \right)_o \left( \text{Ph-O} \right)_p \right]_m \quad \text{(I)}$$

, où Ph dans la formule (I) représente une structure para-phénylène ; o et p sont respectivement des nombres entiers supérieurs ou égaux à 1 ; et m est un nombre entier de 2 à 40, et où la (B) poly(phénylène-éther-cétone) cyclique a un point de fusion inférieur ou égal à 270 °C.

**2.** Composition de résine thermoplastique selon la revendication 1, dans laquelle la (B) poly(phénylène-éther-cétone) cyclique est un mélange contenant pas moins de 5 % en poids d'une poly(phénylène-éther-cétone) cyclique ayant un nombre de répétitions m = 2 et pas moins de 5 % en poids d'une poly(phénylène-éther-cétone) cyclique ayant un nombre de répétitions m = 3 par rapport au poids total de 100 % des poly(phénylène-éther-cétones) cycliques ayant des nombres de répétitions m = 2 à 8 dans la formule générale (I).

**3.** Composition de résine thermoplastique selon une des revendications 1 et 2, dans laquelle la (B) poly(phénylène-éther-cétone) cyclique est un mélange de poly(phénylène-éther-cétones) cycliques ayant au moins trois nombres de répétitions m différents.

**4.** Composition de résine thermoplastique selon l'une quelconque des revendications 1 à 3, dans laquelle la (B) poly(phénylène-éther-cétone) cyclique est une poly(phénylène-éther-éther-cétone) cyclique représentée par la formule générale (II) décrite ci-dessous

[Chim. 2]

(où m dans la formule est un nombre entier de 2 à 40).

**5.** Composition de résine thermoplastique selon l'une quelconque des revendications 1 à 4, dans laquelle la (B) poly(phénylène-éther-cétone) cyclique a un point de fusion inférieur ou égal à 250 °C.

**6.** Composition de résine thermoplastique selon l'une quelconque des revendications 1 à 5, dans laquelle la (B) poly(phénylène-éther-cétone) cyclique a un point de fusion inférieur ou égal à 230 °C.

**7.** Composition de résine thermoplastique selon l'une quelconque des revendications 1 à 6, comprenant en outre :

0,1 à 200 parties en poids de (C) une charge par rapport à 100 parties en poids de la résine thermoplastique (A).

**8.** Composition de résine thermoplastique selon l'une quelconque des revendications 1 à 7, dans laquelle la (C) charge comprend au moins une charge fibreuse.

**9.** Composition de résine thermoplastique selon la revendication 8, dans laquelle la (C) charge est une fibre de verre et/ou une fibre de carbone.

**10.** Produit de procédé produit par moulage à chaud de la composition de résine selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010095615 A
- JP S59187054 A
- JP S62283155 A
- JP S57172954 A
- JP 2009067928 A
- JP 2003268241 A
- JP 262674 A
- JP 295502 A
- US 526438 A
- JP S453368 B
- JP S5212240 B
- JP S617332 A


### Non-patent literature cited in the description


- *Macromolecular Rapid Communications,* 2005, vol. 26, 1377-1382
- *MACROMOLECULAR RAPID COMMUNICATIONS,* 2005, vol. 26, 1378
- *Polymers for Advanced Technologies,* 2005, vol. 16 (7), 84-94
- *Journal of Materials Chemistry,* 2000, vol. 10, 2011-2016